# EUROPEAN PATENT APPLICATION

(11) **EP 3 817 439 A1**
(43) Date of publication of application: **05.05.2021**
(21) Application number: 20204968.0
(22) Date of filing: 30.10.2020
(51) Int. Cl.: H04W 24/02

(54) **PCI CONFIGURATION SON FUNCTIONALITY FOR 5G NETWORKS**

(30) Priority: 31.10.2019 US 201962928680 P
(71) Applicant: INTEL Corporation, Santa Clara, CA 95054 (US)
(72) Inventor: CHOU, Joey, Arizona, 85258 (US); YAO, Yizhi, Arizona, 85248 (US)
(74) Representative: Schwegman Lundberg Woessner Limited

(57) **Abstract**

Systems and methods of configuring and re-configuring PCI values for a NR cell are described. A D-SON or C-SON management function consumes a MnS of NF provisioning with *modifyMOIAttributes* operation to configure or re-configure a PCI list or value for a NR cell, after which the PCI value of the NR cell is set. The PCI value is reported to the MnS of NF provisioning after the PCI value is selected, and a *notifyMOIAttributeValueChange* notification is sent to the management function to indicate the PCI value assigned to the NR cell.

## Description

### PRIORITY CLAIM

This application claims the benefit of priority to United States Provisional Patent Application Serial No. 62/928,680, filed October 31, 2019.

### TECHNICAL FIELD

Embodiments pertain to radio access networks. Some embodiments relate to Third Generation Partnership Project Long Term Evolution (3GPP LTE) networks and LTE advanced (LTE-A) networks as well as 4^{th} generation (4G) networks and 5^{th} generation (5G) networks. Some embodiments relate to self-organizing networks (SON) for 5G networks. Some embodiments relate to Physical Layer Cell Identity (PCI) use in 5G SON networks.

### BACKGROUND

The use of 3GPP LTE systems (including LTE and LTE-Advanced systems) has increased due to both an increase in the types of devices user equipment (UEs) using network resources as well as the amount of data and bandwidth being used by various applications, such as video streaming, operating on these UEs. With the vast increase in number and diversity of communication devices, the corresponding network environment, including routers, switches, bridges, gateways, firewalls, and load balancers, has become increasingly complicated, especially with the advent of next generation (NG) (or new radio (NR)) systems. To add further complexity, a number of identifiers may be used at various points during the connection and communication processes in 5G networks. The available number of a particular identifier, however, may be limited. This may cause collision or confusion when the same identifier is simultaneously used by a particular cell or neighboring cells, which may be exacerbated due to the explosion of both network devices, such as 5^{th} generation NodeBs (gNBs) and UEs.

### SUMMARY

Various respective aspects and features of the present disclosure are defined in the appended claims.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various embodiments discussed in the present document.
FIG. 1A illustrates an architecture of a network, in accordance with some aspects.
FIG. 1B illustrates a non-roaming 5G system architecture in accordance with some aspects.
FIG. 1C illustrates a non-roaming 5G system architecture in accordance with some aspects.
FIG. 2 illustrates a block diagram of a communication device in accordance with some embodiments.
FIG. 3 illustrates an NFV network management architecture in accordance with some embodiments.
FIG. 4 illustrates a PCI configuration in accordance with some embodiments.
FIG. 5 illustrates an initial PCI configuration procedure in accordance with some embodiments.
FIG. 6 illustrates a PCI re-configuration procedure in accordance with some embodiments.
FIG. 7 illustrates another initial PCI configuration procedure in accordance with some embodiments.
FIG. 8 illustrates another PCI re-configuration procedure in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

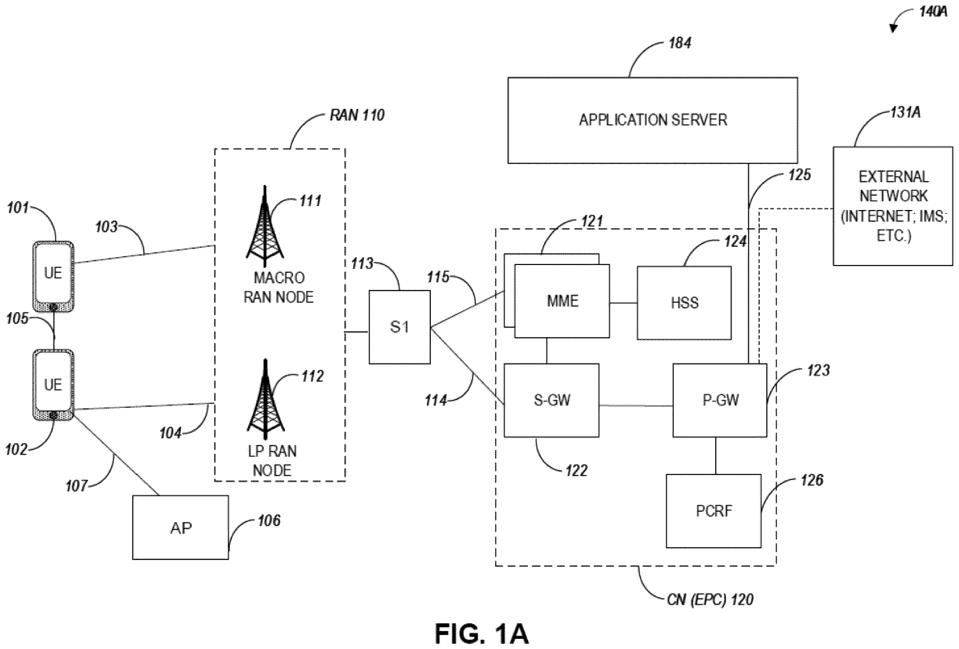

FIG. 1A illustrates an architecture of a network in accordance with some aspects. The network 140A includes 3GPP LTE/4G and NG network functions. A network function can be implemented as a discrete network element on a dedicated hardware, as a software instance running on dedicated hardware, and/or as a virtualized function instantiated on an appropriate platform, e.g., dedicated hardware or a cloud infrastructure.

The network 140A is shown to include user equipment (UE) 101 and UE 102. The UEs 101 and 102 are illustrated as smartphones (e.g., handheld touchscreen mobile computing devices connectable to one or more cellular networks) but may also include any mobile or non-mobile computing device, such as portable (laptop) or desktop computers, wireless handsets, drones, or any other computing device including a wired and/or wireless communications interface. The UEs 101 and 102 can be collectively referred to herein as UE 101, and UE 101 can be used to perform one or more of the techniques disclosed herein.

Any of the radio links described herein (e.g., as used in the network 140A or any other illustrated network) may operate according to any exemplary radio communication technology and/or standard. Any spectrum management scheme including, for example, dedicated licensed spectrum, unlicensed spectrum, (licensed) shared spectrum (such as Licensed Shared Access (LSA) in 2.3-2.4 GHz, 3.4-3.6 GHz, 3.6-3.8 GHz, and other frequencies and Spectrum Access System (SAS) in 3.55-3.7 GHz and other frequencies). Different Single Carrier or OFDM modes (CP-OFDM, SC-FDMA, SC-OFDM, filter bank-based multicarrier (FBMC), OFDMA, etc.), and in particular 3GPP NR, may be used by allocating the OFDM carrier data bit vectors to the corresponding symbol resources.

In some aspects, any of the UEs 101 and 102 can comprise an Internet-of-Things (IoT) UE or a Cellular IoT (CIoT) UE, which can comprise a network access layer designed for low-power IoT applications utilizing short-lived UE connections. In some aspects, any of the UEs 101 and 102 can include a narrowband (NB) IoT UE (e.g., such as an enhanced NB-IoT (eNB-IoT) UE and Further Enhanced (FeNB-IoT) UE). An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network includes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network. In some aspects, any of the UEs 101 and 102 can include enhanced MTC (eMTC) UEs or further enhanced MTC (FeMTC) UEs.

The UEs 101 and 102 may be configured to connect, e.g., communicatively couple, with a radio access network (RAN) 110. The RAN 110 may be, for example, an Evolved Universal Mobile Telecommunications System (UMTS) Terrestrial Radio Access Network (E-UTRAN), a NextGen RAN (NG RAN), or some other type of RAN.

The UEs 101 and 102 utilize connections 103 and 104, respectively, each of which comprises a physical communications interface or layer (discussed in further detail below); in this example, the connections 103 and 104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth-generation (5G) protocol, a New Radio (NR) protocol, and the like.

In an aspect, the UEs 101 and 102 may further directly exchange communication data via a ProSe interface 105. The ProSe interface 105 may alternatively be referred to as a sidelink (SL) interface comprising one or more logical channels, including but not limited to a Physical Sidelink Control Channel (PSCCH), a Physical Sidelink Shared Channel (PSSCH), a Physical Sidelink Discovery Channel (PSDCH), a Physical Sidelink Broadcast Channel (PSBCH), and a Physical Sidelink Feedback Channel (PSFCH).

The UE 102 is shown to be configured to access an access point (AP) 106 via connection 107. The connection 107 can comprise a local wireless connection, such as, for example, a connection consistent with any IEEE 802.11 protocol, according to which the AP 106 can comprise a wireless fidelity (WiFi®) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), Next Generation NodeBs (gNBs), RAN nodes, and the like, and can comprise ground stations (e.g., terrestrial access points) or satellite stations providing coverage within a geographic area (e.g., a cell). In some aspects, the communication nodes 111 and 112 can be transmission/reception points (TRPs). In instances when the communication nodes 111 and 112 are NodeBs (e.g., eNBs or gNBs), one or more TRPs can function within the communication cell of the NodeBs. The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some aspects, any of the RAN nodes 111 and 112 can fulfill various logical functions for the RAN 110 including, but not limited to, radio network controller (RNC) functions such as radio bearer management, uplink and downlink dynamic radio resource management and data packet scheduling, and mobility management. In an example, any of the nodes 111 and/or 112 can be a gNB, an eNB, or another type of RAN node.

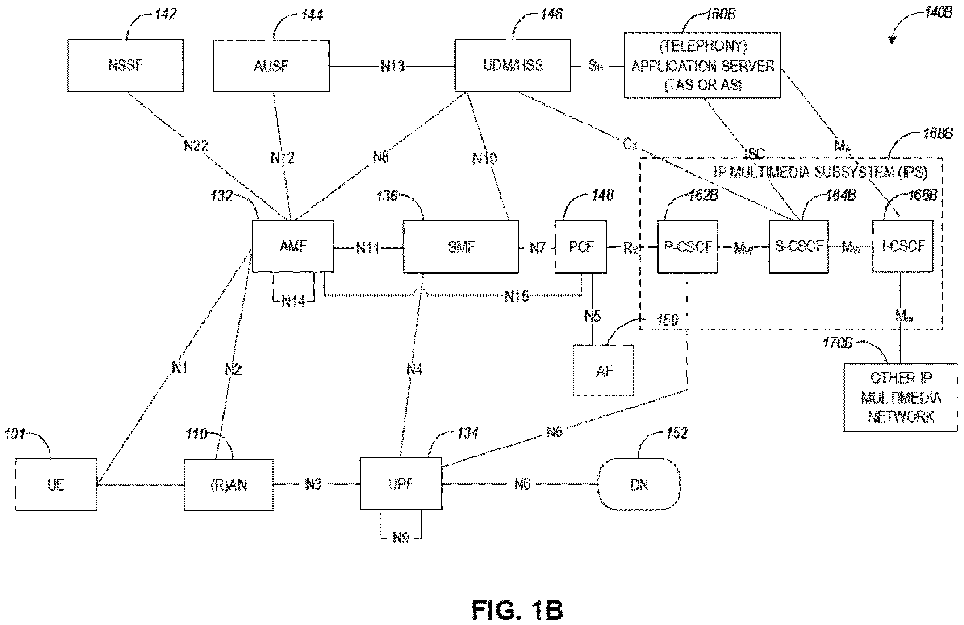

The RAN 110 is shown to be communicatively coupled to a core network (CN) 120 via an S1 interface 113. In aspects, the CN 120 may be an evolved packet core (EPC) network, a NextGen Packet Core (NPC) network, or some other type of CN (e.g., as illustrated in reference to FIGS. 1B-1C). In this aspect, the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this aspect, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities of the S-GW 122 may include a lawful intercept, charging, and some policy enforcement.

The P-GW 123 may terminate an SGi interface toward a PDN. The P-GW 123 may route data packets between the EPC network 120 and external networks such as a network including the application server 184 (alternatively referred to as application function (AF)) via an Internet Protocol (IP) interface 125. The P-GW 123 can also communicate data to other external networks 131A, which can include the Internet, IP multimedia subsystem (IPS) network, and other networks. Generally, the application server 184 may be an element offering applications that use IP bearer resources with the core network (e.g., UMTS Packet Services (PS) domain, LTE PS data services, etc.). In this aspect, the P-GW 123 is shown to be communicatively coupled to an application server 184 via an IP interface 125. The application server 184 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Rules Function (PCRF) 126 is the policy and charging control element of the CN 120. In a non-roaming scenario, in some aspects, there may be a single PCRF in the Home Public Land Mobile Network (HPLMN) associated with a UE's Internet Protocol Connectivity Access Network (IP-CAN) session. In a roaming scenario with a local breakout of traffic, there may be two PCRFs associated with a UE's IP-CAN session: a Home PCRF (H-PCRF) within an HPLMN and a Visited PCRF (V-PCRF) within a Visited Public Land Mobile Network (VPLMN). The PCRF 126 may be communicatively coupled to the application server 184 via the P-GW 123.

In some aspects, the communication network 140A can be an IoT network or a 5G network, including 5G new radio network using communications in the licensed (5G NR) and the unlicensed (5G NR-U) spectrum. One of the current enablers of IoT is the narrowband-IoT (NB-IoT). Operation in the unlicensed spectrum may include dual connectivity (DC) operation and the standalone LTE system in the unlicensed spectrum, according to which LTE-based technology solely operates in unlicensed spectrum without the use of an "anchor" in the licensed spectrum, called MulteFire. Further enhanced operation of LTE systems in the licensed as well as unlicensed spectrum is expected in future releases and 5G systems. Such enhanced operations can include techniques for sidelink resource allocation and UE processing behaviors for NR sidelink V2X communications.

An NG system architecture can include the RAN 110 and a 5G network core (5GC) 120. The NG-RAN 110 can include a plurality of nodes, such as gNBs and NG-eNBs. The core network 120 (e.g., a 5G core network or 5GC) can include an access and mobility function (AMF) and/or a user plane function (UPF). The AMF and the UPF can be communicatively coupled to the gNBs and the NG-eNBs via NG interfaces. More specifically, in some aspects, the gNBs and the NG-eNBs can be connected to the AMF by NG-C interfaces, and to the UPF by NG-U interfaces. The gNBs and the NG-eNBs can be coupled to each other via Xn interfaces.

In some aspects, the NG system architecture can use reference points between various nodes as provided by 3GPP Technical Specification (TS) 23.501 (e.g., V15.4.0, 2018-12). In some aspects, each of the gNBs and the NG-eNBs can be implemented as a base station, a mobile edge server, a small cell, a home eNB, and so forth. In some aspects, a gNB can be a master node (MN) and NG-eNB can be a secondary node (SN) in a 5G architecture.

FIG. 1B illustrates a non-roaming 5G system architecture in accordance with some aspects. In particular, FIG. 1B illustrates a 5G system architecture 140B in a reference point representation. More specifically, UE 102 can be in communication with RAN 110 as well as one or more other 5GC network entities. The 5G system architecture 140B includes a plurality of network functions (NFs), such as an AMF 132, session management function (SMF) 136, policy control function (PCF) 148, application function (AF) 150, UPF 134, network slice selection function (NSSF) 142, authentication server function (AUSF) 144, and unified data management (UDM)/home subscriber server (HSS) 146.

The UPF 134 can provide a connection to a data network (DN) 152, which can include, for example, operator services, Internet access, or third-party services. The AMF 132 can be used to manage access control and mobility and can also include network slice selection functionality. The AMF 132 may provide UE-based authentication, authorization, mobility management, etc., and may be independent of the access technologies. The SMF 136 can be configured to set up and manage various sessions according to network policy. The SMF 136 may thus be responsible for session management and allocation of IP addresses to UEs. The SMF 136 may also select and control the UPF 134 for data transfer. The SMF 136 may be associated with a single session of a UE 101 or multiple sessions of the UE 101. This is to say that the UE 101 may have multiple 5G sessions. Different SMFs may be allocated to each session. The use of different SMFs may permit each session to be individually managed. As a consequence, the functionalities of each session may be independent of each other.

The UPF 134 can be deployed in one or more configurations according to the desired service type and may be connected with a data network. The PCF 148 can be configured to provide a policy framework using network slicing, mobility management, and roaming (similar to PCRF in a 4G communication system). The UDM can be configured to store subscriber profiles and data (similar to an HSS in a 4G communication system).

The AF 150 may provide information on the packet flow to the PCF 148 responsible for policy control to support a desired QoS. The PCF 148 may set mobility and session management policies for the UE 101. To this end, the PCF 148 may use the packet flow information to determine the appropriate policies for proper operation of the AMF 132 and SMF 136. The AUSF 144 may store data for UE authentication.

In some aspects, the 5G system architecture 140B includes an IP multimedia subsystem (IMS) 168B as well as a plurality of IP multimedia core network subsystem entities, such as call session control functions (CSCFs). More specifically, the IMS 168B includes a CSCF, which can act as a proxy CSCF (P-CSCF) 162BE, a serving CSCF (S-CSCF) 164B, an emergency CSCF (E-CSCF) (not illustrated in FIG. 1B), or interrogating CSCF (I-CSCF) 166B. The P-CSCF 162B can be configured to be the first contact point for the UE 102 within the IM subsystem (IMS) 168B. The S-CSCF 164B can be configured to handle the session states in the network, and the E-CSCF can be configured to handle certain aspects of emergency sessions such as routing an emergency request to the correct emergency center or PSAP. The I-CSCF 166B can be configured to function as the contact point within an operator's network for all IMS connections destined to a subscriber of that network operator, or a roaming subscriber currently located within that network operator's service area. In some aspects, the I-CSCF 166B can be connected to another IP multimedia network 170E, e.g. an IMS operated by a different network operator.

In some aspects, the UDM/HSS 146 can be coupled to an application server 160E, which can include a telephony application server (TAS) or another application server (AS). The AS 160B can be coupled to the IMS 168B via the S-CSCF 164B or the I-CSCF 166B.

A reference point representation shows that interaction can exist between corresponding NF services. For example, FIG. 1B illustrates the following reference points: N1 (between the UE 102 and the AMF 132), N2 (between the RAN 110 and the AMF 132), N3 (between the RAN 110 and the UPF 134), N4 (between the SMF 136 and the UPF 134), N5 (between the PCF 148 and the AF 150, not shown), N6 (between the UPF 134 and the DN 152), N7 (between the SMF 136 and the PCF 148, not shown), N8 (between the UDM 146 and the AMF 132, not shown), N9 (between two UPFs 134, not shown), N10 (between the UDM 146 and the SMF 136, not shown), N11 (between the AMF 132 and the SMF 136, not shown), N12 (between the AUSF 144 and the AMF 132, not shown), N13 (between the AUSF 144 and the UDM 146, not shown), N14 (between two AMFs 132, not shown), N15 (between the PCF 148 and the AMF 132 in case of a non-roaming scenario, or between the PCF 148 and a visited network and AMF 132 in case of a roaming scenario, not shown), N16 (between two SMFs, not shown), and N22 (between AMF 132 and NSSF 142, not shown). Other reference point representations not shown in FIG. 1E can also be used.

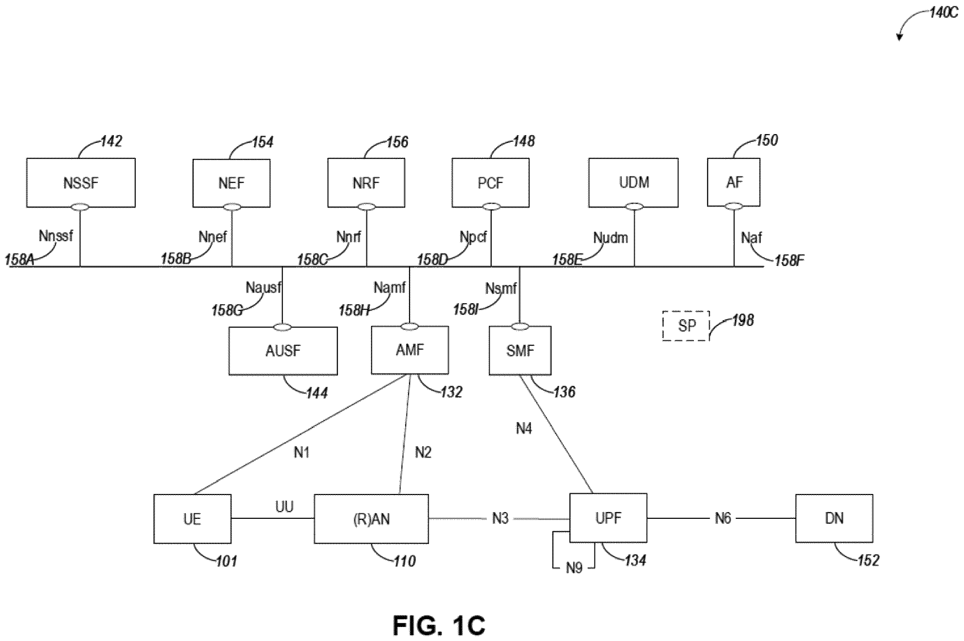

FIG. 1C illustrates a 5G system architecture 140C and a service-based representation. In addition to the network entities illustrated in FIG. 1B, system architecture 140C can also include a network exposure function (NEF) 154 and a network repository function (NRF) 156. In some aspects, 5G system architectures can be service-based and interaction between network functions can be represented by corresponding point-to-point reference points Ni or as service-based interfaces.

In some aspects, as illustrated in FIG. 1C, service-based representations can be used to represent network functions within the control plane that enable other authorized network functions to access their services. In this regard, 5G system architecture 140C can include the following service-based interfaces: Namf 158H (a service-based interface exhibited by the AMF 132), Nsmf 158I (a service-based interface exhibited by the SMF 136), Nnef 158B (a service-based interface exhibited by the NEF 154), Npcf 158D (a service-based interface exhibited by the PCF 148), a Nudm 158E (a service-based interface exhibited by the UDM 146), Naf 158F (a service-based interface exhibited by the AF 150), Nnrf 158C (a service-based interface exhibited by the NRF 156), Nnssf 158A (a service-based interface exhibited by the NSSF 142), Nausf 158G (a service-based interface exhibited by the AUSF 144). Other service-based interfaces (e.g., Nudr, N5g-eir, and Nudsf) not shown in FIG. 1C can also be used.

NR-V2X architectures may support high-reliability low latency sidelink communications with a variety of traffic patterns, including periodic and aperiodic communications with random packet arrival time and size. Techniques disclosed herein can be used for supporting high reliability in distributed communication systems with dynamic topologies, including sidelink NR V2X communication systems.

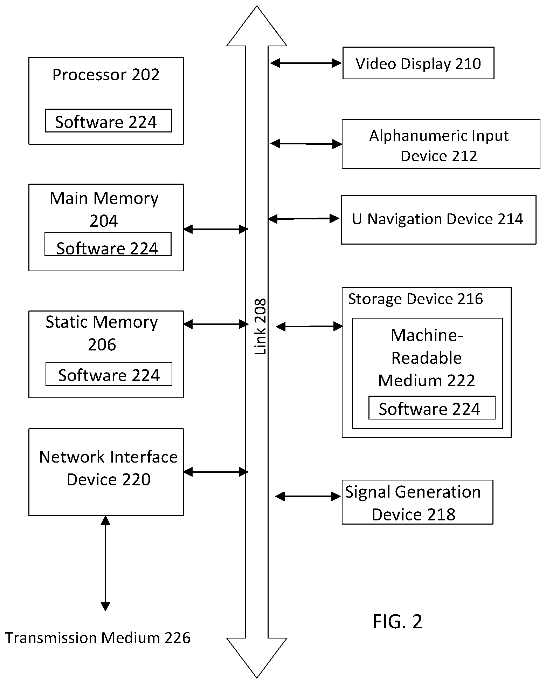

FIG. 2 illustrates a block diagram of a communication device in accordance with some embodiments. The communication device 200 may be a UE such as a specialized computer, a personal or laptop computer (PC), a tablet PC, or a smart phone, dedicated network equipment such as an eNB, a server running software to configure the server to operate as a network device, a virtual device, or any machine capable of executing instructions (sequential or otherwise) that specify actions to be taken by that machine. For example, the communication device 200 may be implemented as one or more of the devices shown in FIG. 1. Note that communications described herein may be encoded before transmission by the transmitting entity (e.g., UE, gNB) for reception by the receiving entity (e.g., gNB, UE) and decoded after reception by the receiving entity.

Examples, as described herein, may include, or may operate on, logic or a number of components, modules, or mechanisms. Modules and components are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" (and "component") is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

The communication device 200 may include a hardware processor (or equivalently processing circuitry) 202 (e.g., a central processing unit (CPU), a GPU, a hardware processor core, or any combination thereof), a main memory 204 and a static memory 206, some or all of which may communicate with each other via an interlink (e.g., bus) 208. The main memory 204 may contain any or all of removable storage and non-removable storage, volatile memory or non-volatile memory. The communication device 200 may further include a display unit 210 such as a video display, an alphanumeric input device 212 (e.g., a keyboard), and a user interface (UI) navigation device 214 (e.g., a mouse). In an example, the display unit 210, input device 212 and UI navigation device 214 may be a touch screen display. The communication device 200 may additionally include a storage device (e.g., drive unit) 216, a signal generation device 218 (e.g., a speaker), a network interface device 220, and one or more sensors, such as a global positioning system (GPS) sensor, compass, accelerometer, or other sensor. The communication device 200 may further include an output controller, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 216 may include a non-transitory machine readable medium 222 (hereinafter simply referred to as machine readable medium) on which is stored one or more sets of data structures or instructions 224 (e.g., software) embodying or utilized by any one or more of the techniques or functions described herein. The instructions 224 may also reside, completely or at least partially, within the main memory 204, within static memory 206, and/or within the hardware processor 202 during execution thereof by the communication device 200. While the machine readable medium 222 is illustrated as a single medium, the term "machine readable medium" may include a single medium or multiple media (e.g., a centralized or distributed database, and/or associated caches and servers) configured to store the one or more instructions 224.

The term "machine readable medium" may include any medium that is capable of storing, encoding, or carrying instructions for execution by the communication device 200 and that cause the communication device 200 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Radio access Memory (RAM); and CD-ROM and DVD-ROM disks.

The instructions 224 may further be transmitted or received over a communications network using a transmission medium 226 via the network interface device 220 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks. Communications over the networks may include one or more different protocols, such as Institute of Electrical and Electronics Engineers (IEEE) 802.11 family of standards known as Wi-Fi, IEEE 802.16 family of standards known as WiMax, IEEE 802.15.4 family of standards, a Long Term Evolution (LTE) family of standards, a Universal Mobile Telecommunications System (UMTS) family of standards, peer-to-peer (P2P) networks, a next generation (NG)/5^{th} generation (5G) standards among others. In an example, the network interface device 220 may include one or more physical jacks (e.g., Ethernet, coaxial, or phone jacks) or one or more antennas to connect to the transmission medium 226.

Note that the term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" or "processor" as used herein thus refers to, is part of, or includes circuitry capable of sequentially and automatically carrying out a sequence of arithmetic or logical operations, or recording, storing, and/or transferring digital data. The term "processor circuitry" or "processor" may refer to one or more application processors, one or more baseband processors, a physical central processing unit (CPU), a single- or multi-core processor, and/or any other device capable of executing or otherwise operating computer-executable instructions, such as program code, software modules, and/or functional processes.

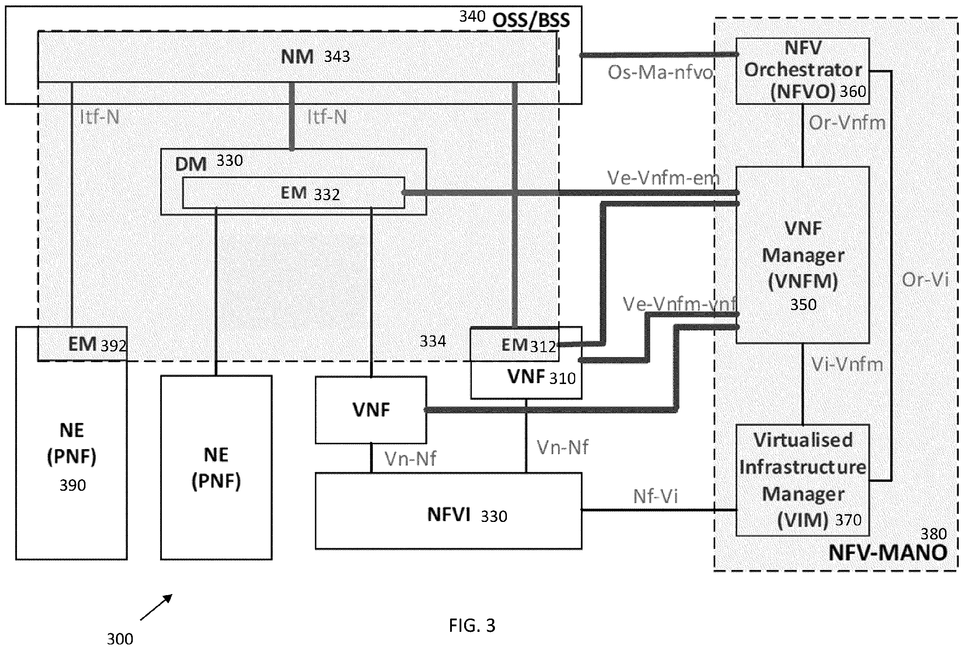

FIG. 3 illustrates an NFV network management architecture in accordance with some embodiments. As illustrated, the NFV network management architecture 300 may include a number of elements (each of which may contain physical and/or virtualized components), including a Network Virtualization Function Infrastructure (NVFI) 330, Network elements (NEs) 390, Virtual Network Functions (VNFs) 310, a Domain Manager (DM) 330, an Element Manager (EM) 332, a Network Manager (NM) 342, and an NFV Management and Orchestration (NFV-MANO) 380. The NFV-MANO 380, which may be replaced as indicated herein by multiple NFV-MANO, may comprise a Virtualized Infrastructure Manager (VIM) 340, a VNF Manager (VNFM) 350, and a Network Function Virtualization Orchestrator (NFVO) 360. The NM 342 may be contained in an Operations Support System/Business Support System (OSS/BSS) 320, with the DM 330 and NM 342 forming the 3GPP management system 314.

The NFV network management architecture 300 may be implemented by, for example, a data center comprising one or more servers in the cloud. The NFV network management architecture 300, in some embodiments, may include one or more physical devices and/or one or more applications hosted on a distributed computing platform, a cloud computing platform, a centralized hardware system, a server, a computing device, and/or an external network-to-network interface device, among others. In some cases, the virtualized resource performance measurement may include, for example, latency, jitter, bandwidth, packet loss, nodal connectivity, compute, network, and/or storage resources, accounting, fault and/or security measurements. In particular, the NEs 390 may comprise physical network functions (PNF) including both hardware such as processors, antennas, amplifiers, transmit and receive chains, as well as software. The VNFs 310 may be instantiated in one or more servers. Each of the VNFs 310, DM 330 and the NEs 390 may contain an EM 322, 332, 392.

The NFV Management and Orchestration (NFV-MANO) 380 may manage the NFVI 330. The NFV-MANO 380 may orchestrate the instantiation of network services, and the allocation of resources used by the VNFs 320. The NFV-MANO 380 may, along with the OSS/BSS 340, be used by external entities to deliver various NFV business benefits. The OSS/BSS 340 may include the collection of systems and management applications that a service provider may use to operate their business: management of customers, ordering, products and revenues - for example, payment or account transactions, as well as telecommunications network components and supporting processes including network component configuration, network service provisioning and fault handling. The NFV-MANO 380 may create or terminate a VNF 320, increase or decrease the VNF capacity, or update or upgrade software and/or configuration of a VNF. The NFV-MANO 380 may include a Virtualized Infrastructure Manager (VIM) 370, a VNF Manager (VNFM) 350 and a NFV Orchestrator (NFVO) 360. The NFV-MANO 380 may have access to various data repositories including network services, VNFs available, NFV instances and NFVI resources with which to determine resource allocation.

The VIM 370 may control and manage the NFVI resources via Nf-Vi reference points within the infrastructure sub-domain. The VIM 370 may further collect and forward performance measurements and events to the VNFM 350 via Vi-VNFM and to the NFVO 360 via Or-Vi reference points. The NFVO 360 may be responsible for managing new VNFs and other network services, including lifecycle management of different network services, which may include VNF instances, global resource management, validation and authorization of NFVI resource requests and policy management for various network services. The NFVO 360 may coordinate VNFs 310 as part of network services that jointly realize a more complex function, including joint instantiation and configuration, configuring required connections between different VNFs 320, and managing dynamic changes of the configuration. The NFVO 360 may provide this orchestration through an OS-Ma-NFVO reference point with the NM 342. The VNFM 350 may orchestrate NFVI resources via the VIM 370 and provide overall coordination and adaptation for configuration and event reporting between the VIM 370 and the EMs and NMs. The former may involve discovering available services, managing virtualized resource availability/allocation/release and providing virtualized resource fault/performance management. The latter may involve lifecycle management that may include instantiating a VNF, scaling and updating the VNF instances, and terminating the network service, releasing the NFVI resources for the service to the NFVI resource pool to be used by other services.

The VNFM 350 may be responsible for the lifecycle management of the VNFs 320 via the Ve-VNFM-VNF reference point and may interface to EMs 322, 332 through the Ve-VNFM--EM reference point. The VNFM 350 may be assigned the management of a single VNF 310, or the management of multiple VNFs 310 of the same type or of different types. Thus, although only one VNFM 350 is shown in FIG. 3, different VNFMs 350 may be associated with the different VNFs 310 for performance measurement and other responsibilities. The VNFM 350 may provide a number of VNF functionalities, including instantiation (and configuration if required by the VNF deployment template), software update/upgrade, modification, scaling out/in and up/down, collection of NFVI performance measurement results and faults/events information and correlation to VNF instance-related events/faults, healing, termination, lifecycle management change notification, integrity management, and event reporting.

The VIM 370 may be responsible for controlling and managing the NFVI compute, storage and network resources, usually within one operator's Infrastructure Domain. The VIM 370 may be specialized in handling a certain type of NFVI resource (e.g. compute-only, storage-only, networking-only), or may be capable of managing multiple types of NFVI resources. The VIM 370 may, among others, orchestrate the allocation/upgrade/release/reclamation of NFVI resources (including the optimization of such resources usage) and manage the association of the virtualized resources to the physical compute, storage, networking resources, and manage repository inventory-related information of NFVI hardware resources (compute, storage, networking) and software resources (e.g. hypervisors), and discovery of the capabilities and features (e.g. related to usage optimization) of such resources.

The NVFI 310 may itself contain various virtualized and non-virtualized resources. These may include a plurality of virtual machines (VMs) 312 that may provide computational abilities (CPU), one or more memories 314 that may provide storage at either block or file-system level and one or more networking elements 316 that may include networks, subnets, ports, addresses, links and forwarding rules to ensure intra- and inter-VNF connectivity.

Each VNF 310 may provide a network function that is decoupled from infrastructure resources (computational resources, networking resources, memory) used to provide the network function. Although not shown, the VNFs 310 can be chained with other VNFs 310 and/or other physical network function to realize a network service. The virtualized resources may provide the VNFs 310 with desired resources. Resource allocation in the NFVI 330 may simultaneously meet numerous requirements and constraints, such as low latency or high bandwidth links to other communication endpoints.

The VNFs 310, like the NEs 390 may be managed by one or more EMs 322, 332, 392. The EM may provide functions for management of virtual or physical network elements, depending on the instantiation. The EM may manage individual network elements and network elements of a sub-network, which may include relations between the network elements. For example, the EM 322 of a VNF 310 may be responsible for configuration for the network functions provided by a VNF 310, fault management for the network functions provided by the VNF 310, accounting for the usage of VNF functions, and collecting performance measurement results for the functions provided by the VNF 310.

The EMs 322, 332, 392 (whether in a VNF 310 or NE 390) may be managed by the NM 342 of the OSS/BSS 340 through Itf-N reference points. The NM 342 may provide functions with the responsibility for the management of a network, mainly as supported by the EM 332 but may also involve direct access to the network elements. The NM 342 may connect and disconnect VNF external interfaces to physical network function interfaces at the request of the NFVO 360.

As above, the various components of the system may be connected through different reference points. The references points between the NFV-MANO 380 and the functional blocks of the system may include an Os-Ma-NFVO between the NM 342 and NFVO 360, a Ve-VNFM-EM between the EM 322, 332 and the VNFM 350, a Ve-VNFM-VNF between a VNF 310 and the VNFM 350, a Nf-Vi between the NFVI 330 and the VIM 370, an Or-VNFM between the NFVO 360 and the VNFM 350, an Or-Vi between the NFVO 360 and the VIM 370, and a Vi-VNFM between the VIM 370 and the VNFM 350. An Or-Vi interface may implement the VNF software image management interface and interfaces for the management of virtualized resources, their catalogue, performance and failure on the Or-Vi reference point. An Or-Vnfm interface may implement a virtualized resource management interface on the Or-Vnfm reference point. A Vi-Vnfm interface may implement a virtualized resource performance/fault management on the Vi-Vnfm reference point.

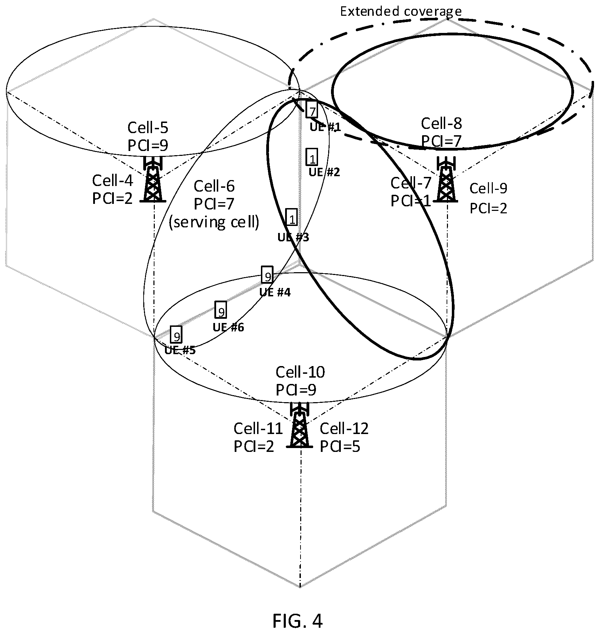

As above, both gNBs and UEs may be assigned different identifiers in 5G networks. In particular, each gNB is assigned a PCI that is broadcast in a Primary Synchronization Signal (PSS) and Secondary Synchronization Signal (SSS). When a UE receives a PSS and SSS to acquire time and frequency synchronization, it also obtains the PCI that is used to uniquely identify an NR cell. The PCI is 3 *N_{ID}⁽¹⁾* + *N_{ID}⁽²⁾,* where *N_{ID}⁽¹⁾* is the PCI group number and *N_{ID}⁽²⁾* is the physical-layer identity. The PSS is used by the UE to determine the physical-layer identity *N_{ID}⁽²⁾* and synchronization. The PSS is provided in the first OFDM symbol in the synchronization signaling block (SSB), spanning over 127 subcarriers of the SSB, which spans 240 subcarriers. Once UE decodes PSS, the UE is able to determine one out of three identities for *N_{ID}⁽²⁾.* In order to derive the PCI, the UE decodes SSS from which PCI group number *N_{ID}⁽¹⁾* is derived. The UE derives the PCI group number *N_{ID}⁽¹⁾* from the SSS, whose timing is determined from the PSS and may be the third OFDM symbol in the SSB. The SSS occupies the same frequency span as the PSS. As the total number of PCIs is 1008, there are 3 PSS sequences and 336 SSS sequences associated with each PSS sequence. FIG. 4 illustrates a PCI configuration in accordance with some embodiments. As shown, each gNB may contain multiple cells, and each cell may have a different PCI.

As there are only 1008 unique PCIs, but there are a massive number of NR cells and small cells operating in millimeter wave bands that are deployed, the PCIs are reused. Typically, operators use network planning tool to assign PCIs to cells when the network is deployed to ensure that all neighboring cells have different PCIs. However, due to the addition of new cells or changes of neighbor relations from Automatic Neighbor Relation (ANR) functions, problems can arise.

Such problems may include PCI collision and PCI confusion. In PCI collision, neighboring cells have the same PCIs. As shown in FIG. 4, for example, neighboring cells do not have the same PCI value. In PCI confusion, a cell has neighboring cells with the same PCI value. In this latter case, Cell #A has PCI that is different from the PCIs of its neighbors - Cell #B and Cell #C, but Cell #B and Cell #C have the same PCI. PCI confusion can impact handover performance as UEs are confused as to which cell they should handover. This is shown in FIG. 4 as cell-7 has neighboring cells cell-6 and cell-8, each of whose PCI values is 7, and cell-6 has neighboring cells cell5 and cell-10, each of whose PCI values is 9.

Note that the ANR function resides in the gNB and manages the Neighbor Relation Table (NRT). Located within ANR, the Neighbor Detection Function finds new neighbors and adds them to the NRT. The ANR also contains the Neighbor Removal Function which removes outdated NRs. An existing Neighbor cell Relation (NR) from a source cell to a target cell means that the gNB controlling the source cell knows the E-UTAN Cell Global Identifier (ECGI)/CGI and PCI of the target cell and has an entry in the NRT for the source cell identifying the target cell. The gNB keeps an NRT for each cell. For each NR, the NRT contains the Target Cell Identifier (TCI), which identifies the target cell.

Either a centralized PCI configuration or distributed PCI configuration may be used to configure the PCI. Accordingly, methods of providing a distributed SON management and centralized SON for PCI configuration are described herein. In a centralized SON (C-SON) solution, the SON algorithm executes in the 3GPP management system. A C-SON solution may be a Cross Domain-Centralized SON solution, in which the SON algorithms are executed in the 3GPP Cross Domain layer, a Domain-Centralized SON solution, in which the SON algorithms are executed in the 3GPP Domain layer, or a hybrid SON. In a Distributed SON (D-SON) solution, the SON algorithms are executed in the Network Function layer.

The SON algorithm may include: monitoring the network(s) by collecting management data, including the data provided by the management data analytics service (MDAS); analyzing the management data to determine if there are issues in the network(s) to be resolved; making the decision on the SON actions to resolve the issues; executing the SON actions; and evaluating whether the issues have been solved by analyzing the management data. Accordingly, in a Cross Domain-Centralized SON, the management function(s) (MnF) in the 3GPP Cross Domain layer monitors the networks via the management data, analyzes the management data, makes decisions on the SON actions, and executes the SON actions.

In the domain-centralized SON, the MnF(s) in the domain layer monitors the networks via management data, analyzes the management data, makes decisions on the SON actions, and executes the SON actions. The MnF(s) in the Cross Domain layer is responsible for management and control of the Domain-Centralized SON function. The management and control may include switching on/off of a Domain-Centralized SON function, making policies for a Domain-Centralized SON function, and/or evaluating the performance of a Domain-Centralized SON function.

In the D-SON, the SON algorithm is located in the NFs. Accordingly, the NFs monitors the network events, analyzes the management data, makes decisions on the SON actions, and executes the SON actions. The D-SON management function switches on/off a D-SON function and provides policies, targets, and supplementary information (e.g., the range attributes) for a D-SON function. The D-SON evaluation function evaluates whether the issues have been resolved and may apply D-SON management actions.

In the hybrid SON, the SON algorithm is executed at two or more of the NF layer, the Domain layer or the 3GPP Cross Domain layer. The 3GPP management system (i.e., MnF(s) in the Domain or 3GPP Cross Domain) and the NFs work together, in a coordinated manner, to build up a complete SON algorithm. The decisions on SON actions may be made by 3GPP management system and/or NFs.

The PCI configuration and re-configuration in C-SON and D-SON solutions are provided below.

### • 6.1.1.x PCI configuration

**REQ-DPCI-CONFIG-FUN-1** Management Service (MnS) producer of D-SON management should have a capability allowing an authorized consumer to set or update the list of PCI value(s) for NR cell(s).

**REQ-DPCI-CONFIG-FUN-2** MnS producer of D-SON management should have a capability allowing an authorized consumer to enable or disable the PCI configuration function.

**REQ-DPCI-CONFIG-FUN-3** MnS producer of D-SON management should have a capability to notify the authorized consumer with the PCI value(s) being selected for NR cell(s).

**REQ-DPCI-CONFIG-FUN-4** MnS producer of D-SON management should have a capability to notify the authorized consumer about the detection or clearance of PCI collision or PCI confusion problems for NR cells.

**REQ-DPCI-CONFIG-FUN-5** MnS producer of D-SON management should have a capability to configure or re-configure the PCI list at the PCI configuration function.

**REQ-DPCI-CONFIG-FUN-6** MnS producer of D-SON management should have a capability to receive the new alarm or cleared alarm for the PCI collision or PCI confusion problems for NR cell(s).

### 6.4 Use cases

### • 6.4.1 Distributed SON management

### • 6.4.1.x PCI configuration

### • 6.4.1.x.1 Initial PCI configuration

| **Use case stage** | **Evolution/Specification** | **<<Uses>> Related use** |
|---|---|---|
| **Goal** | To automatically configure the PCIs for NR cells that have not been assigned with PCIs. | |
| **Actors and Roles** | An authorized consumer of the MnS producer of D-SON management. | |
| **Telecom resources** | - gNB; | |
| | - The MnS producer of D-SON management | |
| **Assumptions** | N/A | |
| **Pre-conditions** | - 5G NR cells are in operation. | |
| | - No PCI values have been assigned to NR cells. | |
| **Begins when** | The MnS producer of D-SON management has been deployed and in operation. | |
| **Step 1 (M)** | The MnS producer of D-SON management receives a request from a consumer to set a list of PCI value(s) for NR cell(s), and then configures the PCI list at the PCI configuration function. | |
| **Step 2 (M)** | The MnS producer of D-SON management receives a request from a consumer to enable the PCI configuration function, and then activates the PCI configuration function at NR cell(s). | |
| **Step 3 (M)** | The PCI configuration function selects PCI value(s) from the list of PCI values provided by the MnS producer of D-SON management, and reports the PCI value(s) to the MnS of D-SON management. | |
| **Step 4 (M)** | The MnS producer of D-SON management notifies the consumer with the PCI value(s) being assigned for the NR cell(s). | |
| **Ends when** | All the steps identified above are successfully completed. | |
| **Exceptions** | One of the steps identified above fails. | |
| **Post-conditions** | The PCI value of a NR cell has been selected. | |
| **Traceability** | **REQ-DPCI-CONFIG-FUN-1, REQ-DPCI-CONFIG-FUN-2, REQ-DPCI-CONFIG-FUN-3, REQ-DPCI-CONFIG-FUN-5** | |

### • 6.4.1.x.2 PCI re-configuration

| **Use case stage** | **Evolution/Specification** | **<<Uses>> Related use** |
|---|---|---|
| **Goal** | To automatically re-configure the PCIs of NR, due to the PCI collision or PCI confusion problems. | |
| **Actors and Roles** | An authorized consumer of the MnS producer of D-SON management. | |
| **Telecom resources** | - gNB; | |
| | - The MnS producer of D-SON management | |
| **Assumptions** | N/A | |
| **Pre-conditions** | - 5G NR cell(s) have being assigned with PCI value(s). | |
| | - The PCI configuration function is in operation, and enabled. | |
| **Begins when** | PCI configuration function has detected the PCI problem of PCI collision or PCI confusion for NR cell(s). | |
| **Step 1 (M)** | The MnS producer of D-SON management receives an alarm indicating the PCI collision or PCI confusion problems for an NR cell(s). | |
| **Step 2 (M)** | The MnS producer of D-SON management notifies the MnS consumer about the PCI collision or PCI confusion problems for an NR cell(s). | |
| **Step 3 (M)** | The MnS producer of D-SON management receives the update of the PCI list for NR cell(s), and re-configure the PCl list at the PCI configuration function. | |
| **Step 4 (M)** | The PCI configuration function selects PCI value(s) from the PCI list, and reports the PCI value(s) to the MnS of D-SON management | |
| **Step 5 (M)** | The MnS producer of D-SON management notifies the consumer with the PCI value(s) being assigned for the NR cell(s). | |
| **Step 6 (M)** | The MnS producer of D-SON management receives a clear alarm notification. | |
| **Step 7 (M)** | The MnS producer of D-SON management notifies the MnS consumer about the resolution of PCI collision or PCI confusion problems. | |
| **Ends when** | All the steps identified above are successfully completed. | |
| **Exceptions** | One of the steps identified above fails. | |
| **Post-conditions** | The PCI collision or PCI confusion have been resolved. | |
| **Traceability** | **REQ-DPCI-CONFIG-FUN-3, REQ-DPCI-CONFIG-FUN-4, REQ-DPCI-CONFIG-FUN-5, REQ-DPCI-CONFIG-FUN-6** | |

### • 6.1.1x PCI configuration

**REQ-CPCI-CONFIG-FUN-1** MnS producer of C-SON should have a capability allowing an authorized consumer to enable the PCI configuration for NR cell(s).

**REQ- CPCI-CONFIG-FUN-2** MnS producer of C-SON should have a capability to configure or re-configure the PCI value(s) for NR cell(s).

**REQ- CPCI-CONFIG-FUN-3** MnS producer of C-SON management should have a capability to notify the authorized consumer with the PCI value(s) being assigned to NR cell(s).

**REQ- CPCI-CONFIG-FUN-4** MnS producer of C-SON should have a capability to detect and resolve the PCI collision and PCI confusion issues

**REQ-CPCI-CONFIG-FUN-5** MnS producer of C-SON management should have a capability to notify the authorized consumer about the detection or clearance of PCI collision or PCI confusion problems for NR cells.

### • 6.4.2 Centralized SON

### • 6.4.2.x PCI configuration

### • 6.4.2.x.1 Initial PCI configuration

| **Use case stage** | **Evolution/Specification** | **«Uses» Related use** |
|---|---|---|
| **Goal** | To automatically configure the PCIs of NR cell(s) that have not been assigned with PCI value(s). | |
| **Actors and Roles** | An authorized consumer of the MnS producer of C-SON. | |
| **Telecom resources** | - gNB; | |
| | - The MnS producer of C-SON | |
| **Assumptions** | N/A | |
| **Pre-conditions** | - 5G NR cells are in operation, but are not yet assigned with PCI values. | |
| | - The MnS producer of C-SON has been in operation. | |
| **Begins when** | The MnS producer of C-SON receives a request from a consumer to enable C-SON for PCI configuration for NR cell(s). | |
| **Step 1 (M)** | The MnS producer of C-SON determines the PCI value(s) for the NR cell(s) that have no collition or confusion with its neighbours. | |
| **Step 2 (M)** | The MnS producer of C-SON configures the PCI value(s) at the NR cell(s). | |
| **Step 3 (M)** | The MnS producer of C-SON reports to the consumer with the PCI value(s) being asssigned for the NR cell(s). | |
| **Ends when** | All the steps identified above are successfully completed. | |
| **Exceptions** | One of the steps identified above fails. | |
| **Post-conditions** | The PCI value of a NR cell has been selected. | |
| **Traceability** | **REQ-CPCI-CONFIG-FUN-1, REQ-CPCI-CONFIG-FUN-2, REQ-CPCI-CONFIG-FUN-3** | |

### • 6.4.2.x.2 PCI re-configuration

| **Use case stage** | **Evolution/Specification** | **<<Uses>> Related use** |
|---|---|---|
| **Goal** | To automatically re-configure the PCIs of NR cells, due to the PCI conllision or PCI confusion problems. | |
| **Actors and Roles** | An authorized consumer of the MnS producer of C-SON. | |
| **Telecom resources** | - gNB; | |
| | - The MnS producer of C-SON | |
| **Assumptions** | N/A | |
| **Pre-conditions** | - 5G NR cells are in operation. | |
| | - The MnS producer of C-SON has been in operation, and enabled. | |
| **Begins when** | The MnS producer of C-SON collects the PCI related measurements (e.g. performance measurements related to connections and mobility, historical PCI configuration data) reported by NG-RAN. | |
| **Step 1 (M)** | The MnS producer of C-SON analyzes the PCI related information and detects that NR cells have experienced PCI conflict or confusion issues. | |
| **Step 2 (M)** | The MnS producer of C-SON management notifies the MnS consumer about the PCI collision or PCI confusion problems for NR cell(s). | |
| **Step 3 (M)** | The MnS producer of C-SON determines the new PCI value(s), and re-configure the PCI value for the NR cell(s) experienced PCI conflict or confusion issues. | |
| **Step 4 (M)** | The MnS producer of C-SON management notifies the MnS consumer about the resolution of PCI collision or PCI confusion problems for NR cell(s). | |
| **Ends when** | All the steps identified above are successfully completed. | |
| **Exceptions** | One of the steps identified above fails. | |
| **Post-conditions** | The PCI value of a NR cell has been selected. | |
| **Traceability** | **REQ-CPCI-CONFIG-FUN-2, REQ-CPCI-CONFIG-FUN-4, REQ-CPCI-CONFIG-FUN-5** | |

### 8.1 Distributed SON management

### • 8.1.x PCI configuration

### • 8.1.x.1 Initial PCI configuration

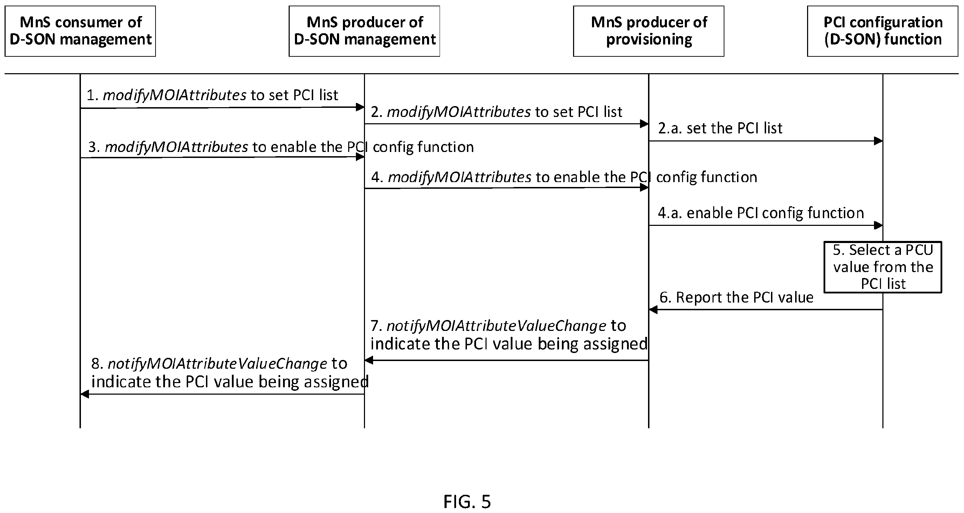

FIG. 5 illustrates an initial PCI configuration procedure in accordance with some embodiments. In particular, FIG. 5 depicts a procedure that describes how an MnS producer of D-SON management (also called D-SON management function) can manage the PCI configuration (D-SON) function to initially assign the PCI values to NR cells. In one embodiment, the MnS producer of D-SON management may be, for example, at a server in the cloud, while the MnS producer of provisioning and the PCI configuration (D-SON) function may be in a gNB. In another embodiment, the MnS producer of D-SON management and the MnS producer of provisioning may be in a server and the PCI configuration (D-SON) function may be in a gNB.

As shown in FIG. 5, at operation 1, the MnS consumer of D-SON management consumes the MnS of D-SON management with a *modifyMOIAttributes* operation to configure the PCI list for NR cell(s). At operation 2, the MnS producer of D-SON management (D-SON management function) consumes the MnS of NF provisioning with a *modifyMOIAttributes* operation to configure the PCI list for NR cell(s). At operation 2a, the MnS of provisioning sets the PCI list at the PCI configuration (D-SON) function.

At operation 3, the MnS consumer of D-SON management consumes the MnS of D-SON management with a *modifyMOIAttributes* operation to enable the PCI configuration function for the NR cell(s). At operation 4, the MnS producer of D-SON management consumes the MnS of NF provisioning with a *modifyMOIAttributes* operation to enable the PCI configuration function for NR cell(s) (if not enabled). At operation 4a, the MnS of provisioning enables the PCI configuration (D-SON) function.

At operation 5, the PCI configuration (D-SON) function selects PCI value(s) from the PCI list. At operation 6, the PCI configuration (D-SON) function reports the PCI value(s) assigned to the MnS of NF provisioning. At operation 7, the MnS of NF provisioning sends a notification *notifyMOIAttributeValueChange* to the MnS producer of D-SON management to indicate the PCI value(s) being assigned to the NR cell(s). At operation 8, the MnS producer of D-SON management sends a notification *notifyMOIAttributeValueChange* to MnS consumer of D-SON management to indicate the PCI value(s) being assigned to NR cell(s). The interface between the MnS of provisioning and PCI configuration (D-SON) function is not subject to standardization.

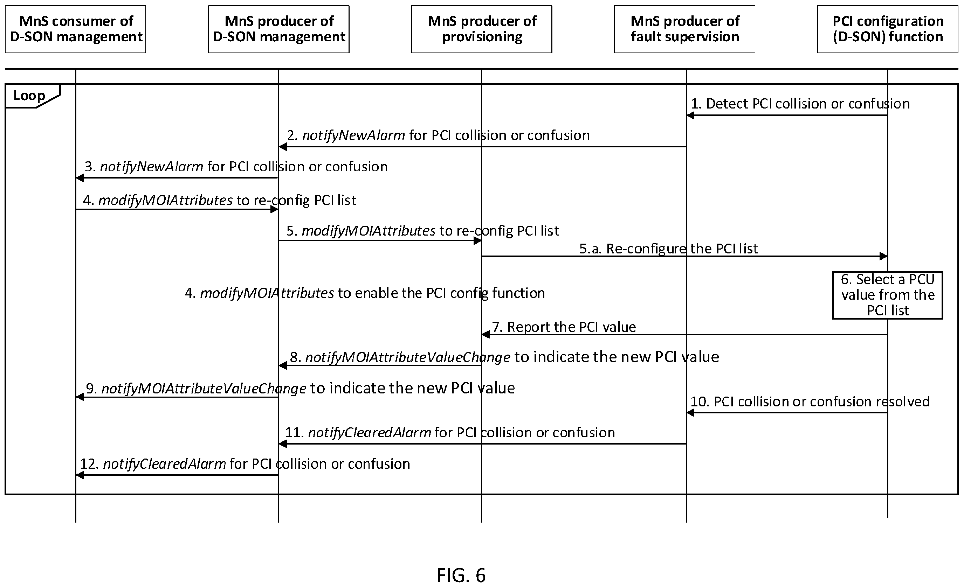

FIG. 6 illustrates a PCI re-configuration procedure in accordance with some embodiments. In particular, FIG. 6 depicts a procedure that describes how an MnS producer of D-SON management can re-configure the PCI list for NR cell(s) when PCI collision or PCI confusion issues are detected.

At operation 1, the PCI configuration (D-SON) function detects and reports the PCI collision or PCI confusion problems for NR cell(s) to the MnS of fault supervision. At operation 2, the MnS producer of fault supervision sends a notification *notifyNewAlarm* to the MnS producer of D-SON management to report the PCI collision or PCI confusion problems detected on the NR cell(s). At operation 3, the MnS producer of D-SON management sends a notification *notifyNewAlarm* to MnS consumer of D-SON management to report the PCI collision or PCI confusion problems.

At operation 4, the MnS consumer of D-SON management consumes the MnS of D-SON management with a *modifyMOIAttributes* operation to re-configure the PCI list for the NR cell(s). At operation 5, the MnS producer of D-SON management consumes the MnS of NF provisioning with a *modifyMOIAttributes* operation to re-configure the PCI list for the NR cell(s). At operation 5a, the MnS of provisioning re-configures the PCI list for NR cell(s).

At operation 6, the PCI configuration (D-SON) function selects PCI value(s) from the updated PCI list. At operation 7, the PCI configuration (D-SON) function reports the PCI value(s) assigned to the MnS of NF provisioning. At operation 8, the MnS of NF provisioning sends a notification *notifyMOIAttributeValueChange* to the MnS producer of D-SON management to indicate the PCI value(s) being assigned to the NR cell(s). At operation 9, the MnS producer of D-SON management sends a notification *notifyMOIAttributeValueChange* to the MnS consumer of D-SON management to indicate the PCI value(s) being assigned to the NR cell(s).

At operation 10, the PCI configuration (D-SON) function notifies the MnS of fault supervision that the PCI collision or PCI confusion problems have been resolved. At operation 11, the MnS producer of fault supervision sends a notification *notifyClearedAlarm* to the MnS producer of D-SON management to report the PCI collision or PCI confusion problems being resolved. At operation 12, the MnS producer of D-SON management sends a notification *notifyNewAlarm* to the MnS consumer of D-SON management to report the PCI collision or PCI confusion problems being resolved. The interface between MnS of provisioning and PCI configuration (D-SON) function is not subject to standardization.

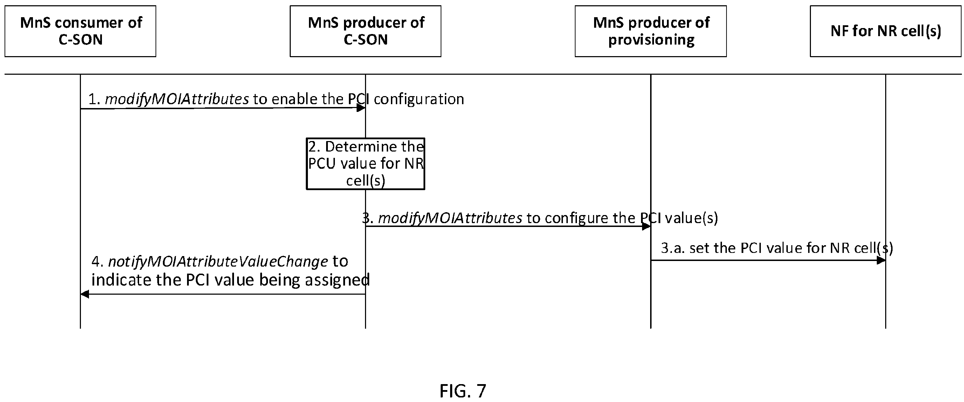

FIG. 7 illustrates another initial PCI configuration procedure in accordance with some embodiments. In particular, FIG. 7 depicts a procedure that describes how a MnS producer of a C-SON (or C-SON function) can initially assign the PCI values to NR cells. Similar to the above, in one embodiment, the MnS producer of C-SON may be, for example, at a server in the cloud, while the MnS producer of provisioning and the NF may be in a gNB. In another embodiment, the MnS producer of C-SON and the MnS producer of provisioning may be in a server and the NF may be in a gNB.

At operation 1, the MnS consumer of C-SON consumes the MnS of the C-SON with a *modifyMOIAttributes* operation to enable PCI configuration for the NR cell(s). At operation 2, the MnS producer of the C-SON determines the PCI value(s) for the NR cell(s). At operation 3, the MnS producer of the C-SON consumes the MnS of NF provisioning with a *modifyMOIAttributes* operation to configure the PCI value(s) for the NR cell(s). At operation 3a, the MnS of provisioning sets the PCI value(s) for the NR cell(s). At operation 4, the MnS producer of the C-SON sends a notification *notifyMOIAttributeValueChange* to the MnS consumer of the C-SON to indicate the PCI value(s) being assigned to NR cell(s). As above, the interface between the MnS of provisioning and PCI configuration (D-SON) function is not subject to standardization.

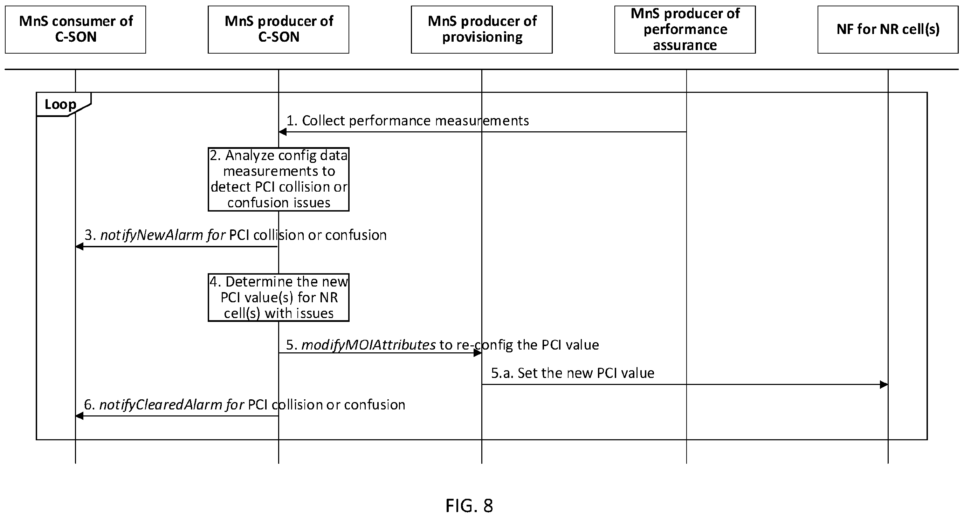

FIG. 8 illustrates another PCI re-configuration procedure in accordance with some embodiments. In particular, FIG. 8 depicts a procedure that describes how a MnS producer of C-SON can re-configure the PCI list for NR cell(s) when PCI collision or PCI confusion issues were detected. It is assumed that the MnS producer of the C-SON has consumed the MnS of performance assurance to create PM jobs to collect PCI related measurements.

At operation 1, the MnS producer of the C-SON collects PCI related performance measurements that are derived from MeasResultListNR (a list of measured results for the maximum number of reported best cells for an NR measurement identity [covering measured results for intra-frequency, inter-frequency, and inter-RAT mobility]). At operation 2, the MnS producer of the C-SON analyzes the NRM data and PCI related measurements to detect the PCI collision or PCI confusion problems for the NR cell(s).

At operation 3, the MnS producer of the C-SON sends a notification *notifyNewAlarm* to the MnS consumer of the C-SON to report the PCI collision or PCI confusion problems detected on the NR cell(s).

At operation 4, the MnS producer of the C-SON determines the new PCI value(s) for the NR cell(s). At operation 5, the MnS producer of the C-SON consumes the MnS of NF provisioning with *modifyMOIAttributes* operation to re-configure the PCI list for the NR cell(s). At operation 5a, the MnS of provisioning sets the PCI value(s) for the NR cell(s). At operation 6, the MnS producer of the C-SON sends a notification *notifyClearedAlarm* to MnS consumer of the C-SON to report the PCI collision or PCI confusion problems being solved.

### 7.1 Management services for D-SON management

### • 7.1.x PCI configuration

### • 7.1.x.1 Management services

| **MnS Name** | **MnS Component Type A (operations and notifications)** | **MnS Component Type B (information model)** | **Note** |
|---|---|---|---|
| D-SON management | Operations defined in clause 11.1.1 of TS 28.532: | | |
| | - getMOIAttributes operation | | |
| | - modifyMOIAttributes operation | | |
| | Operations defined in clause 11.2.1 of TS 28.532: | | |
| | - notifyNewAlarm | | |
| | - notifyClearedAlarm | | |

### • 7.1.x.2 Information definition

### • 7.1.x.2.1 Control information

The control information parameter is used to control the PCI configuration function, and are given by:

| **Control parameter** | **Definition** | **Legal Values** |
|---|---|---|
| PCI configuration control | This attribute allows authorized consumer to enable/disable the PCI configuration functionality. | Boolean |
| | | On, off |

### • 7.1.x.2.2 Parameters to be updated

The parameter updated by the PCI configuration function is:

| **Parameters** | **Definition** | **Legal Values** |
|---|---|---|
| PCl list | The list of PCI to be used by D-SON PCI configuration function to assign the PCI for NR cells. | 0..1007 |

### • 7.1.x.2.3 Alarm information

The alarms to be generated by PCI configuration are:

| **Performance measurements** | **Description** | **Note** |
|---|---|---|
| PCI collision alarm | The collision alarm is used to indicate two neighbouring cells of a serving cell are using the same PCIs. | |
| PCI Confusion alarm | The confusion alarm is used to indicate that a serving cell has 2 neighbouring cells that are using the same PCI value. | |

### 7.2 Management services for C-SON

### • 7.2.x PCI configuration

### • 7.2.x.1 Management services

| **MnS Name** | **MnS Component Type A (operations and notifications)** | **MnS Component Type B (information model)** | **Note** |
|---|---|---|---|
| C-SON | Operations defined in clause 11.1.1 of TS 28.532: | | |
| | - getMOIAttributes operation | | |
| | - modifyMOIAttributes operation | | |
| | - notifyMOIAttributesValueChanges operation | | |
| | Operations defined in clause 11.2.1 of TS 28.532: | | |
| | - notifyNewAlarm | | |
| | - notifyClearedAlarm | | |

### • 7.2.x.2 Information definition

### • 7.2.x.2.1 Control information

The parameter used to control the PCI configuration function is:

| **Control parameter** | **Definition** | **Legal Values** |
|---|---|---|
| PCI configuration control | This attribute allows authorized consumer to enable/disable the PCI configuration functionality. | Boolean |
| | | On, off |

### • 7.2.x.2.2 Performance measurements

The performance measurements related to the PCI configuration function are:

**Table 7.1.x.4-1. PCI related performance measurements**

| **Performance measurements** | **Description** | **Note** |
|---|---|---|
| PCI of candidate cells | The measurement contains cumulative counter with subcounters that is identified by the PCI value(s) of the candidate cells and is derived from MeasResultListNR (see clause 6.3.2 in TS 38.331) where it contains PCI in PhysCellld, and RSRP/RSRQ in MeasQuantityResults of candidate cells. It is generated when the RSRP received from the candidate cells exceeds certain threshold. | The example in Fig. 4 shows the measurement with: |
| | | • Subcounter #1 (PCI 1) is 1 |
| | | • Subcounter #2 (PCI 7) is 2 |
| | | • Subcounter #3 (PCI 2) is 3 |
| | | It indicates that there is a potential conflict between cell 8 and cell 6 as the same PCI is used, after the coverage of cell 8 has been extended. |

The getMOIAttributes operation is invoked by getMOIAttributes operation service consumer to request the retrieval of management information (Managed Object attribute names and values) from the MIB maintained by getMOIAttributes operation service provider. One or several Managed Objects may be retrieved - based on the containment hierarchy. The modifyMOIAttributes operation is invoked by modifyMOIAttributes operation service consumer to request the modification of one or more Managed Object instances from modifyMOIAttributes operation service producer. Attributes of one or several Managed Objects may be modified. The notifyNewAlarm notification is generated by the MnS producer when a new AlarmInformation is added to the AlarmList. The notification parameters depend on the alarmType and are different for non-security and security alarms. The notifyNewAlarm notification is generated by the MnS producer when the perceivedSeverity of an existing AlarmInformation changes to "CLEARED". The notification notifyMOIAttributesValueChange is one of notification notifyMOIChanges and notifies subscribed MnS consumers that values of Managed Object Instance attributes have been replaced.

### Z1. modifyMOIAttributes operation

This service operation is invoked by modifyMOIAttributes operation service consumer to request the modification of one or more Managed Object instances from modifyMOIAttributes operation service producer. Attributes of one or several Managed Objects may be modified.

**• Table z1-1: Input parameters**

| **Parameter Name** | **Support Qualifier** | **Information Type / Legal Values** | **Comment** |
|---|---|---|---|
| baseObjectInstance | M | DN | The MO instance that is to be used as the starting point for the selection of managed objects to which the filter (when supplied) is to be applied. This is a full DN according to 3GPP TS 32.300 [5]. |
| scope | M | See corresponding parameter in getMOIAttributes. | See corresponding parameter in getMOIAttributes. |
| filter | M | See comment. | See corresponding parameter in getMOIAttributes. |
| modificationList | M | LIST OF SEQUENCE <attribute identifier, [attribute values], ENUM( replace, add values, remove values, set to default)> | This parameter contains a set of attribute modification specifications, each of which contains: |
| | | | 1). attribute identifier: the identifier of the attribute whose value(s) is (are) to be modified. |
| | | See Comment for when attribute values are require and when they are optional. | 2). attribute value: the value(s) to be used in the modification of the attribute. The use of this parameter is defined by the modify operator. This parameter is optional when the set to default modify operator is specified and if supplied, shall be ignored. |
| | | | 3). modify operator: the way in which the attribute values(s) (if supplied) is(are) to be applied to the attribute. The possible operators are: |
| | | | a) replace: the attribute value(s) specified shall be used to replace the current values(s) of the attribute; |
| | | | b) add values: the attribute values(s) specified shall be added to the current value(s) of the attribute. This operator shall only be applied to a set-valued attribute and shall perform a set union |
| | | | (in the mathematical sense) between the current values(s) of the attribute and the attribute value(s) specified. Value(s) specified in the attribute value parameter which is(are) already in the current values of the attribute shall not cause an error to be returned. |
| | | | c) remove values: the attribute value(s) specified shall be removed from the current values(s) of the attribute. This operator shall only be applied to a set-valued attribute and shall perform a set difference (in the mathematical sense) between the current value(s) of the attribute and the attribute values(s) specified. Value(s) specified in the attribute value parameter which is(are) not in the current value(s) of the attribute shall not cause an error to be returned; |
| | | | d) set to default: when this operator is applied to a single-valued attribute, the value of the attribute shall be set to its default value. When this operator is applied to a set-valued attribute, the value(s) of the attribute shall be set to their default value(s) and only as many values as defined by the default shall be assigned. If there is no default value defined, an error shall be returned. |
| | | | Note: Set is used here in the mathematical sense so that a set-valued attribute is an unordered set of unique values. |
| | | | The modify operator is optional, and if it is not specified, the replace operator shall be assumed. |
| | | | The modification List parameter contains a single set of attribute modification specifications and this same set is applied to each MO instance to be modified. |

**• Table z1-2:Output parameters**

| **Parameter name** | **Support Qualifier** | **Matching Information / Legal Values** | **Comment** |
|---|---|---|---|
| modificationListOut | M | LIST OF SEQUENCE< ManagedEntity DN, ManagedEntity class, LIST OF SEQUENCE< attribute name, attribute value >> | This parameter will provide for each managed object instance the full DN of the managed object instance, the managedObjectClass, and a list of name/value pairs with the values of all the attributes of the modified managed object instance after modification. The form of this information is SS dependant and may be provided in one or many data structures. |
| status | M | ENUM (OperationSucceeded, Operation Failed, OperationPartiallySucceeded) | An operation may fail because of a specified or unspecified reason and no attributes have been updated. The operation is only successful if all specified attributes of all selected objects are actually modified. Otherwise, the operation is partially successful. |

In lieu of a synchronization parameter, best effort synchronization will apply; that is, all managed objects selected for this operation will perform the operation if possible regardless of whether some managed objects fail to perform it.

*Results*: In case of success, all of the ManagedEntity instances selected for modification are modified. In case of failure, a specified or unspecified reason may be provided in the Output parameters.

A RESTful HTTP-based solution may be used for the modifyMOIAttributes operation, for example, using the HTTP PATCH method where the resource URI is "/{className}/{id}". The PATCH method provides an entity containing a list of changes to be applied to the resource requested using the resource/HTTP URI. This operation modifies one or multiple resources representing managed object instances.

**Table z1-3: Mapping of IS operation input parameters to SS equivalents (HTTP PATCH)**

| **IS operation parameter name** | **SS parameter location** | **SS parameter name** | **SS parameter type** | **SQ** |
|---|---|---|---|---|
| baseObjectInstance | path | /{className}/{id} | className: string id: string | M |
| scope | query | scope | scope-QueryType | M |
| filter | query | filter | filter-QueryType | M |
| modificationList | request body | n/a | resou rceModification-RequestType | M |

The scope query parameter is of type string in the present document. No scoping mechanism is specified. The filter query parameter is of type string in the present document. No filter language is specified.

**Table z1-4: Mapping of IS operation output parameters to SS equivalents (HTTP PATCH)**

| **IS operation parameter name** | **SS parameter location** | **SS parameter name** | **SS parameter type** | **SQ** |
|---|---|---|---|---|
| attributeListOut | response body | data | resou rceModification-ResponseType | M |
| status | response status codes | n/a | n/a | M |
| | response body | error | error-ResponseType | M |

The message flow for modification of one or multiple resources is as follows:
The Service Consumer sends an HTTP PATCH request to the Service Provider. The target URI identifies the base resource. The scope query parameter identifies other resources besides the base resource. The filter query parameter is applied to the set of scoped resources. Only resources passing the filter criteria are targeted. The message body contains the patch document.

The Service Provider sends a HTTP PATCH response to the Service Consumer. On success, "200 OK" shall be returned. The message body carries the modified resource representations. On failure, an appropriate error code shall be returned. The response message body shall provide additional error information.

### Z2. notifyMOIAttributeValueChanges operation

This notification notifies the subscribed consumers that changes of one or several attributes of a Managed Object Instance in the NRM.

**• Table z2-1: Input parameters**

| **Parameter Name** | **Support Qualifier** | **Information Type** / **Legal Values** | **Comment** |
|---|---|---|---|
| objectClass | M | It shall carry the ManagedEntity class name. | It specifies the class name of the IOC. A network event has occurred in an instance of this class. |
| objectInstance | M | It shall carry the DN of the ManagedEntitiy. | It specifies the existing instance of the above IOC in which the network event related to by carrying the Distinguished Name (DN) for the instance. |
| notificationId | M | This is an identifier for the notification, which may be used to correlate notifications. | The identifier of the notification shall be chosen to be unique across all notifications of a particular managed object throughout the time that correlation is significant, it uniquely identifies the notification from other notifications generated by the subject Information Object. |
| notification Type | M | It specifies the type of provisioning management services related notifications. The value "notifyMOIAttributeValueChange" shall be carried. | It specifies the type of notification. |
| event Time | M | It indicates the MOIAttributeValueChange event time. | The semantics of Generalised Time specified by ITU-T[17] shall be used here. |
| systemDN | M | It shall carry the DN of management service providers. | - |
| correlatedNotifications | CM | It specifies a set of notifications that are correlated to the subject notification. | The condition is that the MnS producer support the correlation of notifications |
| attributeValueChange | M | LIST OF SEQUENCE <AttributeName, NewAttributeValue, CHOICE [NULL, OldAttributeValue]> | The changed attributes (name/value pairs) of the MOI (with both new and, optionally, old values). |
| additional Text | O | It can contain further information in text on the event of the ManagedEntity(s). | - |

**Table z2-2: Triggering event, From-state - stateBeforeAttributeValueChange**

| **Assertion Name** | **Definition** |
|---|---|
| stateBeforeAttributeValueChange | The subject attribute has a value at time T1. |

**Table z2-3: Triggering event, To-state - stateAfterAttributeValueChange**

| **Assertion Name** | **Definition** |
|---|---|
| stateAfterAttributeValueChange | The subject attribute has been changed to a value other than the value at time T1. |

### Z3. notifyNewAlarm

A new AlarmInformation has been added in the AlarmList. The subscribed consumers are notified of this fact if the added AlarmInformation satisfies the current filter constraint of their subscription.

There are two tables for Input Parameters. If alarmType parameter indicates "Communications Alarm", "Processing Error Alarm", "Environmental Alarm". "Quality Of Service Alarm" or "Equipment Alarm", the first table (see Table z3-1) shall be applicable for this notifyNewAlarm. If alarmType parameter indicates "Integrity Violation", "Operational Violation", "Physical Violation", "Security Service or Mechanism Violation" or "Time Domain Violation", the second table (see Table z3-2) shall be applicable.

**Table z3-1: Input Parameters for notification related to Non-securit alarm**

| **Parameter Name** | **Qualifier** | **Matching Information/ Information Type / Legal** Values | **Comment** |
|---|---|---|---|
| objectClass | M | MonitoredEntity.objectClass It shall carry the MonitoredEntity class name. | The MonitoredEntity is identified by the relation-AlarmedObject-AlarmInformation of the new AlarmInformation. |
| objectInstance | M | MonitoredEntity.objectInstance It shall carry the Distinguished Name (DN) of the instance of MonitoredEntity class. | The MonitoredEntity is identified by the relation-AlarmedObject-AlarmInformation of the new AlarmInformation. |
| notificationId | M | This is an identifier for the notification, which may be used to correlate notifications. The identifier of the notification shall be chosen to be unique across all notifications of a particular managed object throughout the time that correlation is significant, it uniquely identifies the notification from other notifications generated by the subject Information Object. | |
| event Time | M | Alarm Information. alarm RaisedTime | |
| systemDN | C | It shall carry the DN of service providers. | |
| notification Type | M | "notifyNewAlarm". | |
| probableCause | M | Alarm Information. probableCause | |
| perceivedSeverity | M | Alarm Information. perceivedSeverity | |
| rootCauseIndicator | O | It indicates that this AlarmInformation is the root cause of the events captured by the notifications whose identifiers are in the related CorrelatedNotification instances. | "Yes", "No" |
| alarmType | M | Alarm Information. eventType | The notification structure defined by this table is applicable if this parameter indicates "Communications Alarm", "Processing Error Alarm", "Environmental Alarm". "Quality Of Service Alarm" or "Equipment Alarm". |
| specificProblem | O | AlarmInformation.specificProblem | |
| correlatedNotifications | O | The set of CorrelatedNotification related to this AlarmInformation. | |
| backedUpStatus | O | AlarmInformation.backedUpStatus | |
| backUpObject | O | MonitoredEntity.objectInstance It carries the DN of the back up object. | The object is identified by relation-BackUpObject-AlarmInformation of the new AlarmInformation. |
| trendIndication | O | AlarmInformation.trendIndication | |
| thresholdInfo | O | AlarmInformation.thresholdInfo | |
| stateChangeDefinition | O | AlarmInformation.stateChangeDefinition | |
| monitoredAttributes | O | Alarmlnformation. monitoredAttributes | |
| proposedRepairActions | O | AlarmInformaton.proposedRepairActions | |
| additionalText | O | AlarmInformation.additionalText | |
| additionalInformation | O | AlarmInformation.additionalInformation | |
| alarmId | M | AlarmInformation.alarmId | |
| NOTE: MonitoredEntity represents objects that can have an alarmed state. | | | |

**Table z3-2: Input Parameters for notification related to security alarm**

| **Parameter Name** | **Qualifier** | **Matching Information/ Information Type / Legal Values** | **Comment** |
|---|---|---|---|
| objectClass | M | MonitoredEntity.objectClass It shall carry the MonitoredEntity class name. | The MonitoredEntity is identified by the relation-AlarmedObject-AlarmInformation of the new AlarmInformation. |
| objectInstance | M | MonitoredEntity.objectInstance It shall carry the Distinguished Name (DN) of the instance of MonitoredEntity class. | The MonitoredEntity is identified by the relation-AlarmedObject-AlarmInformation of the new Alarm Information. |
| notificationId | M | This is an identifier for the notification, which may be used to correlate notifications. The identifier of the notification shall be chosen to be unique across all notifications of a particular managed object throughout the time that correlation is significant, it uniquely identifies the notification from other notifications generated by the subject Information Object. | |
| event Time | M | Alarm Information. alarm RaisedTime | |
| systemDN | C | It shall carry the DN of service providers. | |
| notification Type | M | "notifyNewAlarm". | |
| probableCause | M | AlarmInformation.probableCause | |
| perceivedSeverity | M | AlarmInformation.perceivedSeverity | |
| rootCauseIndicator | O | It indicates that this AlarmInformation is the root cause of the events captured by the notifications whose identifiers are in the related CorrelatedNotification instances. | "Yes", "No" |
| alarmType | M | Alarm Information. eventType | The notification structure of this table is applicable if this parameter indicates "Integrity Violation", "Operational Violation", "Physical Violation", "Security Service or Mechanism Violation", "Time Domain Violation". |
| correlatedNotifications | O | The set of CorrelatedNotification related to this AlarmInformation. | |
| additional Text | O | Alarm Information. additionalText | |
| additional Information | O | AlarmInformation.additionalInformation | |
| serviceUser | M | AlarmInformation.securityServiceUser | This may contain no information if the identify of the serviceuser (requesting the service) is not known. |
| serviceProvider | M | AlarmInformation.securityServiceProvider | This shall always identify the serviceprovider receiving a service request, from serviceUser, that provokes the security alarm. |
| securityAlarmDetector | M | AlarmInformation.securityAlarmDetector | This may contain no information if the detector of the security alarm is the serviceProvider. |
| alarmId | M | AlarmInformation. alarmId | |
| NOTE: MonitoredEntitv represents objects that can have an alarmed state. | | | |

**Table z3-3: Triggering event, From-state - noMatchedAlarm**

| **Assertion Name** | **Definition** |
|---|---|
| noMatchedAlarm | AlarmList does not contain an AlarmInformation that has the following properties: Its matching-criteria-attributes values are identical to that of the newly generated network alarm and it is involved in relation-AlarmObject-Alarmlnformation with the same MonitoredEntitv as the one identified bv the newly generated network alarm. |

**Table z3-4: Triggering event, From-state - newAlarmInAlarmList**

| **Assertion name** | **Definition** |
|---|---|
| newAlarmInAlarmList | AlarmList contains an AlarmInformation holding information conveyed by the newly generated network alarm. This AlarmInformation is involved in relation-AlarmObject-AlarmInformation with the same MonitoredEntity as the one identified by the newly generated network alarm. |
| | The following attributes of the AlarmInformation shall be populated with information in the newly generated alarm. |
| | alarmId, notificationId, alarmRaisedTime, eventType, probableCause, perceivedSeverity. |
| | The following attributes of the same AlarmInformation shall be populated with information in the newly generated alarm if the information is present (in the newly generated alarm) and if the attribute is supported: |
| | specificProblem, backedUpStatus, trendIndication, thresholdlnfo, stateChangeDefinition, monitoredAttributes, proposedRepairActions, additionalText, additional Information. |

A RESTful HTTP-based solution may be used for the notifyNewAlarm, for example, using the HTTP POST method where the resource URI is "/notificationSink." The 3GPP IS notification parameters for the notification notifyNewAlarm are mapped to SS equivalents according to table z3-5 and table 12.2.2.2.1.2-1 of [m2].

**Table Z3-5: Mapping of IS notification parameters to SS equivalents in 'fault3gppFields'**

| **3GPP IS notification parameter name** | **SQ** | **SS parameter name in 'fault3gppFields'** - **clause A.2.2** | **S** Q |
|---|---|---|---|
| objectClass, objectInstance | M | DN | M |
| notification Type | M | notificationType (value = 'notifyNewAlarm') | M |
| systemDN | C | svstemDN | O |
| probableCause | M | probableCause | M |
| perceivedSeverity | M | perceivedSeverity | M |
| rootCauseIndicator | O | rootCauselndicator | O |
| alarmType | M | alarmType | M |
| specificProblem | O | specificProblem | O |
| correlatedNotifications | O | correlatedNotifications | O |
| backedUpStatus | O | backedUpStatus | O |
| backUpObject | O | backUpObject | O |
| trendIndication | O | trendIndication | O |
| thresholdInfo | O | thresholdInfo | O |
| stateChangeDefinition | O | stateChangeDefinition | O |
| monitoredAttributes | O | monitoredAttributes | O |
| proposedRepairActions | O | proposedRepairActions | O |
| additional Text | O | additionalText | O |
| additional Information | O | additionalInformation | O |
| alarmId | O | alarmId | O |

The IS notification parameters of the notification notifyNewAlarm are mapped to SS equivalents according to table z3-6.

**Table z3-6: Mapping of IS notification parameters to SS equivalents**

| **IS notification parameter name** | **SS parameter location** | **SS parameter name** | **SS parameter type** | **SQ** |
|---|---|---|---|---|
| objectClass, objectInstance | request body | href | uri-Type | M |
| notificationId | request body | notificationId | notification Id-Type | M |
| notification Type | request body | notification Type | notification Type- Type | M |
| event Time | request body | eventTime | dateTime-Type | M |
| systemDN | request body | systemDN | system DN-Type | C |
| probableCause | request body | probableCause | probableCause-Type | M |
| perceivedSeverity | request body | perceivedSeverity | perceivedSeverity-Type | M |
| rootCauseIndicator | request body | rootCauselndicator | rootCauseIndicator-Type | O |
| alarmType | request body | alarmType | alarmType-Type | M |
| specificProblem | request body | specificProblem | specificProblem-Type | O |
| correlatedNotifications | request body | correlatedNotifications | array(correlatedNotification-Type) | O |
| backedUpStatus | request body | backedUpStatus | backedUpStatus-Type | O |
| backUpObject | request body | backUpObject | backUpObject-Type | O |
| trendIndication | request body | trendlndication | trendIndication-Type | O |
| thresholdInfo | request body | thresholdlnfo | thresholdlnfo-Type | O |
| stateChangeDefinition | request body | stateChangeDefinition | array(attributeValueChange-Type) | O |
| monitoredAttributes | request body | monitoredAttributes | array(attributeNameValuePair-Type) | O |
| proposedRepairActions | request body | proposed Repair Actions | proposed Repair Actions-Type | O |
| additional Text | request body | additionalText | additionalText-Type | O |
| additional Information | request body | additionalInformation | array(attributeNameValuePair-Type) | O |
| alarmId | request body | alarmld | alarmld-Type | O |

### Z4. notifyClearedAlarm

This interface notifies the alarm clearing information if it satisfies filter constraint in AlarmInformation. The notification shall satisfy all filter constraint and notify in the notifyNewAlarmNotification.

**• Table z4-1: Input Parameters**

| **Parameter Name** | **Qualifier** | **Legal type** | **Comment** |
|---|---|---|---|
| objectClass | M | -- | It identifies the object class whose perceived severity level is cleared. |
| objectInstance | M | -- | It identifies the object instance whose perceived severity level is cleared. |
| notificationId | M | -- | It identifies the notification that carries the AlarmInformation. |
| event Time | M | -- | It identifies the last time when the event occurred. |
| notification Type | M | "notifyClearedAlarm" | |
| probableCause | M | -- | |
| perceivedSeverity | M | -- | Its value shall indicate Cleared. |
| alarmType | M | -- | |
| correlated Notifications | O | The set of CorrelatedNotification related to this AlarmInformation. | It contains references to other AlarmInformation instances whose perceivedSeverity levels are Cleared as well. In this way, perceivedSeverity level of multiple AlarmInformation instances can be Cleared bv one notification. |
| clearUserId | O | -- | It carries the identity of the user who invokes the clearAlarms operation. |
| clearSystemId | O | -- | It carries the identity of the authorized consumer. |
| alarmId | M | -- | It identifies one AlarmInformation in the AlarmList. |

**Table z4-2: Triggering event, From-state - alarmMatchedAndCleared OR clearedByProvider**

| **Assertion Name** | **Definition** |
|---|---|
| alarmMatchedAndCleared | The matching-criteria-attributes of the newly generated network alarm have values that are identical (matched) with ones in one AlarmInformation in AlarmList and the perceivedSeverity of the matched AlarmInformation is not Cleared AND The perceivedSeverity of the newly generated network alarm is cleared. |
| clearedByProvider | Reception of a valid clearAlarms operation that identifies the subject AlarmInformation instances. This triggering event shall occur regardless of the perceivedSeverity state of the identified AlarmInformation instances. |

**Table z4-3: Triggering event, To-state - alarmInformationCleared_1 OR alarmInformationCleared_2**

| **Assertion Name** | **Definition** |
|---|---|
| alarmInformationCleared_1 | Case if From-state is alarmMatchedAndCleared: The following attributes of the subject AlarmInformation are updated: notificationId, perceivedSeverity (updated to Cleared), alarmClearedTime. |
| alarmInformationCleared_2 | Case if From-state is clearedByProvider: The following attributes of the subject AlarmInformation are updated: notificationId, perceivedSeverity (updated to Cleared), alarmClearedTime, alarmClearedUserld, alarmClearedSvstemld. |

A RESTful HTTP-based solution may be used for the modifyMOIAttributes operation, for example, using the HTTP POST method where the resource URI is "/notificationSink". The IS notification parameters are mapped to SS equivalents according to table z4-4.

**Table z4-4: Mapping of IS notification parameters to SS equivalents**

| **IS notification parameter name** | **SS parameter location** | **SS parameter name** | **SS parameter type** | **SQ** |
|---|---|---|---|---|
| objectClass, objectInstance | request body | href | uri-Type | M |
| notificationId | request body | notificationId | notification Id-Type | M |
| notification Type | request body | notification Type | notification Type- Type | M |
| event Time | request body | eventTime | dateTime-Type | M |
| systemDN | request body | systemDN | system DN-Type | C |
| alarmId | request body | alarmld | alarmld | M |
| alarmType | request body | alarmType | alarmType | M |
| probableCause | request body | probableCause | probableCause | M |
| perceivedSeverity | request body | perceivedSeverity | perceivedSeverity | M |
| correlatedNotifications | request body | correlatedNotifications | array(correlatedNotification-Type) | O |
| clearUserId | request body | clearUserld | clearUserld | O |
| clearSystemId | request body | clearSystemld | clearSystemld | O |

The network may also configure a UE to report measurement information back to the network. The network may configure the UE to report measurement information per beam (which can either be measurement results per beam with respective beam identifier(s) or only beam identifier(s)). If beam measurement information is configured to be included in measurement reports, the UE applies the layer 3 beam filtering. On the other hand, the exact L1 filtering of beam measurements used to derive cell measurement results is implementation dependent. The UE performs a measurement result transfer procedure to transfer measurement results from the UE to the network. For the *measId* for which the measurement reporting procedure was triggered, the UE sets the *measResults* within a *MeasurementReport* message. An example *MeasurementReport* message used for the indication of the measurement results is shown below.

### MeasurementReport message

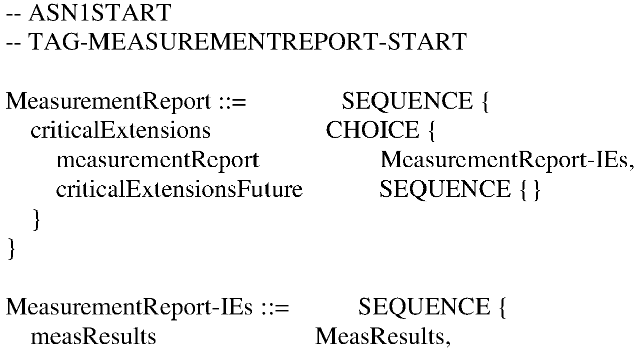

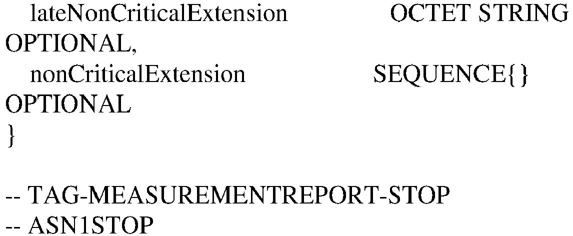

As shown above, the example *MeasurementReport* message includes a *MeasResults* IE. The *MeasResults* IE covers measured results for intra-frequency, inter-frequency, and inter-RAT mobility. An example *MeasResults* IE, and field description table, are shown below.

### MeasResults information element

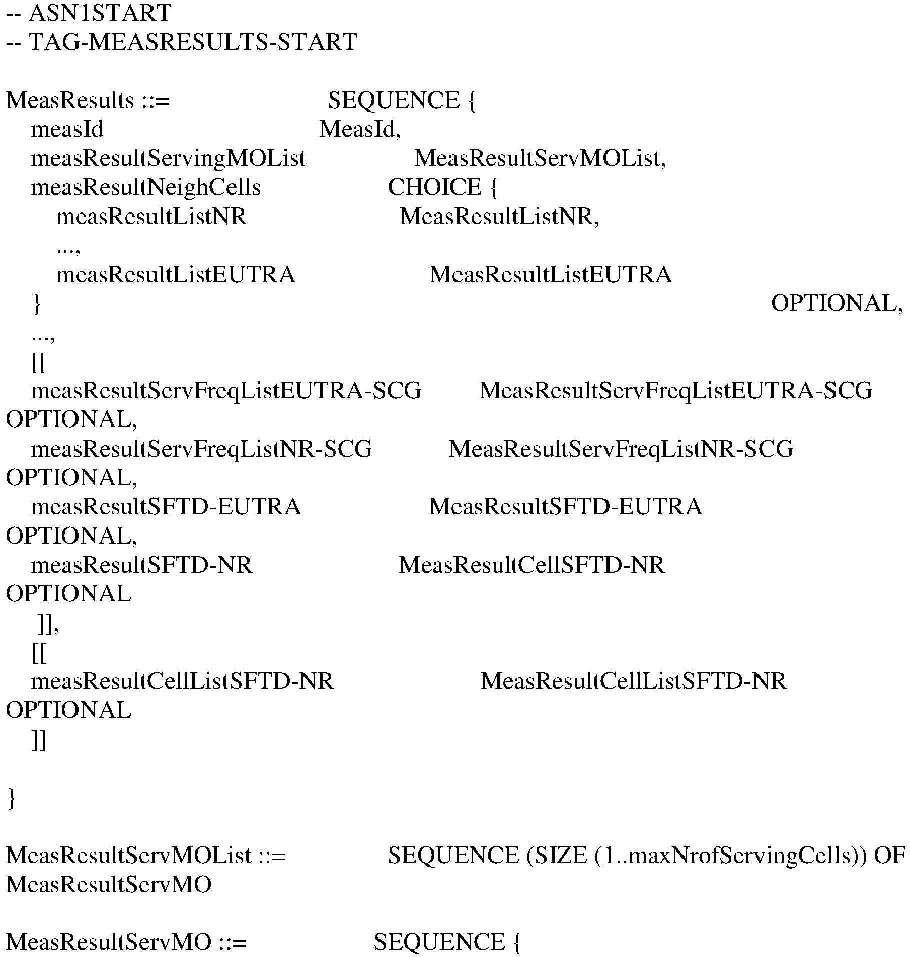

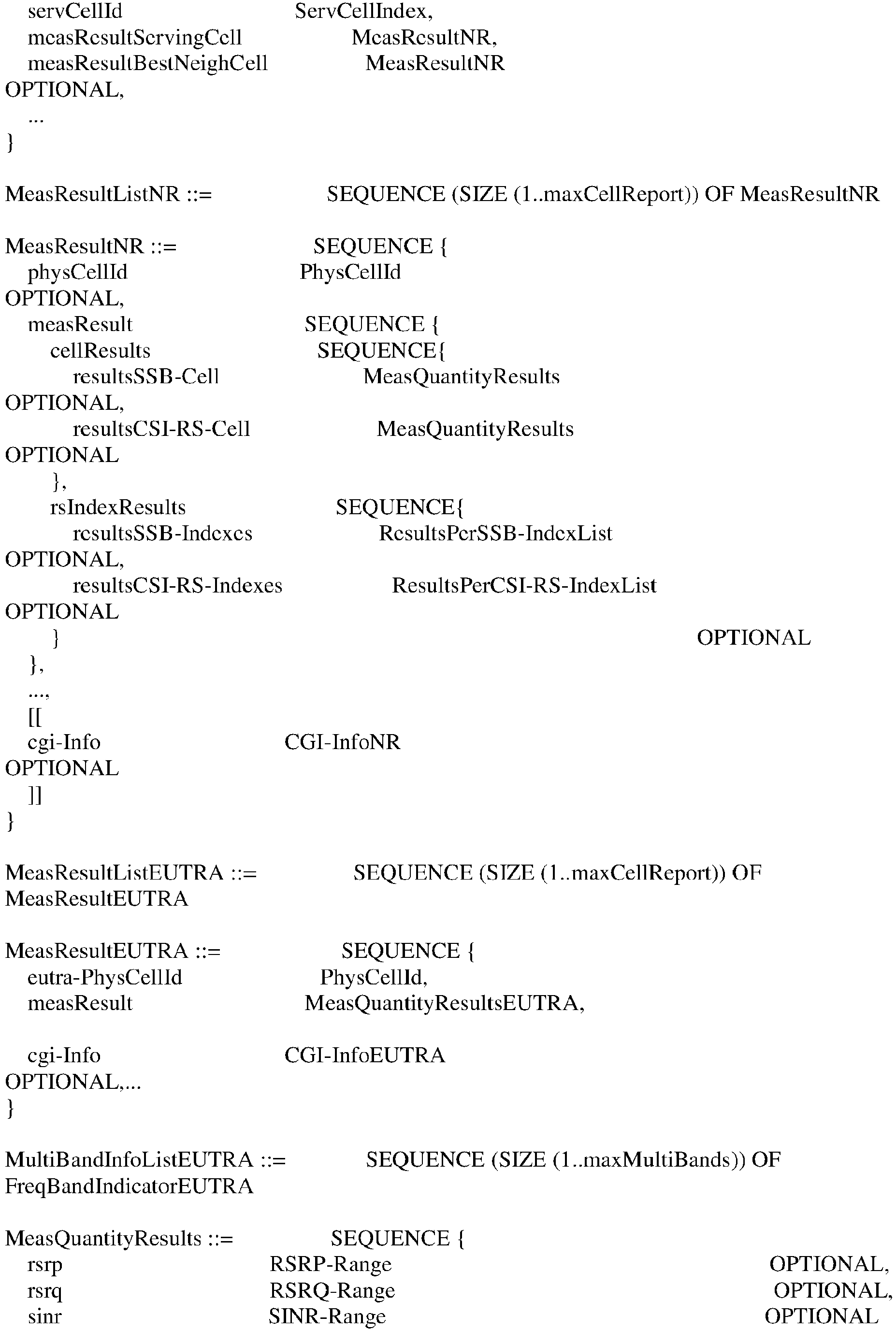

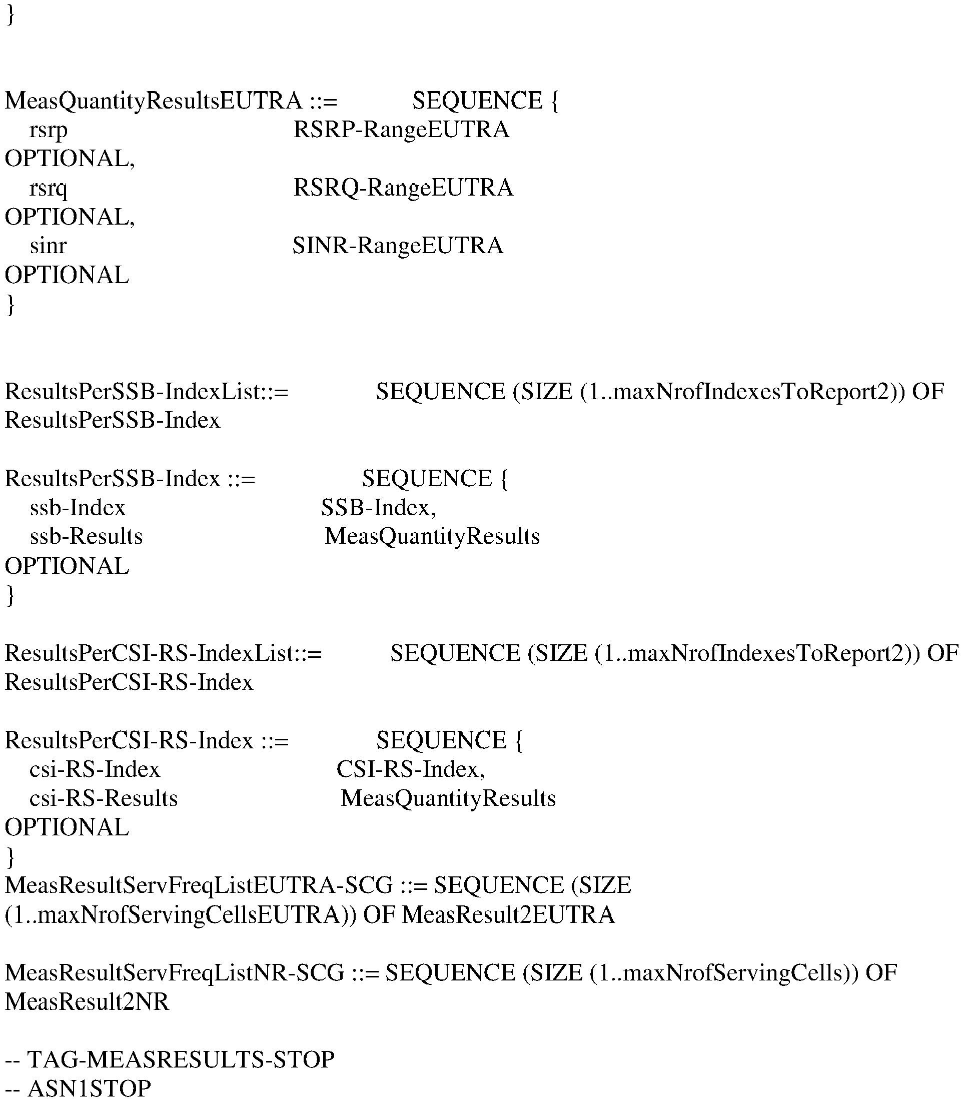

| ***MeasResultNR* field descriptions** |
|---|
| ***cellResults*** |
| Cell level measurement results. |

| ***physCellId*** |
|---|
| The physical cell identity of the NR cell for which the reporting is being performed. |

| ***resultsSSB-Cell*** |
|---|
| Cell level measurement results based on SS/PBCH related measurements. |

| ***resultsSSB-Indexes*** |
|---|
| Beam level measurement results based on SS/PBCH related measurements. |

| ***resultsCSI-RS-Cell*** |
|---|
| Cell level measurement results based on CSI-RS related measurements. |

| ***resultsCSI-RS-Indexes*** |
|---|
| Beam level measurement results based on CSI-RS related measurements. |

| ***rsIndexResults*** |
|---|
| Beam level measurement results. |
| ***MeasResults* field descriptions** |

| ***measId*** |
|---|
| Identifies the measurement identity for which the reporting is being performed. |

| ***measResultCellListSFTD-NR*** |
|---|
| SFTD measurement results between the PCell and the NR neighbour cell(s) in NR standalone. |

| ***measResultEUTRA*** |
|---|
| Measured results of an E-UTRA cell. |

| ***measResultListEUTRA*** |
|---|
| List of measured results for the maximum number of reported best cells for an E-UTRA measurement identity. |

| ***measResultListNR*** |
|---|
| List of measured results for the maximum number of reported best cells for an NR measurement identity. |

| ***measResultNR*** |
|---|
| Measured results of an NR cell. |

| ***measResultServFreqListEUTRA-SCG*** |
|---|
| Measured results of the E-UTRA SCG serving frequencies: the measurement result of PSCell and each SCell, if anv, and of the best neighbouring cell on each E-UTRA SCG serving frequency. |

| ***measResultServFreqListNR-SCG*** |
|---|
| Measured results of the NR SCG serving frequencies: the measurement result of PSCell and each SCell, if any, and of the best neighbouring cell on each NR SCG serving frequency. |

| ***measResultServingMOList*** |
|---|
| Measured results of measured cells with reference signals indicated in the serving cell measurement objects including measurement results of SpCell, configured SCell(s) and best neighbouring cell within measured cells with reference signals indicated in on each serving cell measurement object. |

| ***measResultSFTD-EUTRA*** |
|---|
| SFTD measurement results between the PCell and the E-UTRA PScell in NE-DC. |

| ***measResultSFTD-NR*** |
|---|
| SFTD measurement results between the PCell and the NR PScell in NR-DC. |

| ***MeasResultEUTRA* field descriptions** |
|---|
| ***eutra-PhysCellld*** |
| Identifies the physical cell identity of the E-UTRA cell for which the reporting is being performed. The UE reports a value in the range 0..503, other values are reserved. |

According to various embodiments, the PCI for one or more candidate cells and/or candidate cell measurements are used as PCI related performance measurements, and a cumulative counter with subcounters are identified by the PCI value(s) of the candidate cells. In these embodiments, the candidate cell measurements and/or the PCI of the candidate cell measurements is/are derived from the *MeasResultListNR* IE/parameter that contains the PCI in a *PhysCellId* IE/parameter of the *MeasResults* IE. Additionally or alternatively, RSRP/RSRQ measurement criteria/parameters are derived for the candidate cells from the *MeasQuantityResults* IE/parameter in the *MeasResults* IE.

### EXAMPLES

Example A01 includes an apparatus of a New Radio (NR) network, the apparatus comprising: memory and processing circuitry configured to operate as a consumer of management service (MnS) of Distributed Self-Organizing Network (D-SON) when configured to perform initial PCI configuration, the processing circuitry is to is configured to: consume the MnS of D-SON management with modifyMOIAttributes operation to configure the PCI list for NR cell(s); consume the MnS of D-SON management with modifyMOIAttributes operation to enable the PCI configuration function for NR cell(s); and receive a notification notifyMOIAttributeValueChange to MnS producer of D-SON management to indicate the PCI value(s) being assigned to NR cell(s).
Example A02 includes the apparatus of example A01 and/or some other example(s) herein, wherein, to configure the PCI list for NR cell(s), the MnS producer of D-SON management is configured to consume the MnS of NF provisioning with modifyMOIAttributes operation to configure the PCI list for a given NR cell that will set the PCI list for the PCI configuration function in NR cell(s).
Example A03 includes the apparatus of example A01 and/or some other example(s) herein, wherein to enable the PCI configuration function, the MnS producer of D-SON management is configured to consume the MnS of NF provisioning with modifyMOIAttributes operation to enable the PCI configuration function for NR cell(s) that will set the PCI list for the PCI configuration function in NR cell(s) that will enable the PCI configuration function in NR cell(s).
Example A04 includes the apparatus of examples A02 and A03 and/or some other example(s) herein, wherein after the PCI configuration function is enabled, and the PCI list is given, the PCI configuration function is configured to: select the PCI value(s) from the PCI list; and report the PCI value(s) assigned to the MnS of NF provisioning.
Example A05 includes the apparatus of example A04 and/or some other example(s) herein, wherein MnS of NF provisioning is configured to send a notification notifyMOIAttributeValueChange to MnS producer of D-SON management that will send a notification notifyMOIAttributeValueChange to MnS consumer of D-SON management to indicate the PCI value(s) being assigned to NR cell(s).
Example A06 may include an apparatus of a New Radio (NR) network, the apparatus comprising: memory and processing circuitry configured to operate as a consumer of MnS D-SON when configured to perform PCI re-configuration, and the processing circuitry is to is configured to: receive a notification notifyNewAlarm from MnS producer of D-SON management to report the PCI collision or PCI confusion problems; consume the MnS of D-SON management with modifyMOIAttributes operation to re-configure the PCI list for NR cell(s); receive a notification notifyMOIAttributeValueChange to MnS producer of D-SON management to indicate the PCI value(s) being assigned to NR cell(s); and receive a notification notifyClearedNewAlarm from MnS producer of D-SON management to report the PCI collision or PCI confusion problems being resolved.
Example A07 includes the apparatus of example A06 and/or some other example(s) herein, wherein after receiving a notification notifyNewAlarm from MnS producer of fault supervision, the MnS producer of D-SON management send a notification notifyNewAlarm to MnS producer of D-SON management to report the PCI collision or PCI confusion problems detected on NR cell(s).
Example A08 includes the apparatus of example A06 and/or some other example(s) herein, wherein after receiving a notification notifyClearedNewAlarm from MnS producer of fault supervision, the MnS producer of D-SON management send a notification notifyClearedNewAlarm to MnS producer of D-SON management to report that the PCI collision or PCI confusion problems has been resolved.
Example A09 includes the apparatus of example A06 and/or some other example(s) herein, wherein after MnS of D-SON management is configured to consume MnS of NF provisioning with modifyMOIAttributes operation to re-configure the PCI list for NR cell(s), as per instruction from the consumer of MnS of D-SON management.
Example A10 includes the apparatus of example A09 and/or some other example(s) herein, wherein the MnS of NF provisioning is configured to set the new PCI list at the PCI configuration function.
Example A11 includes the apparatus of example A10 and/or some other example(s) herein, wherein the PCI configuration function is configured to select the PCI value from the list, and reports the PCI value(s) assigned to the MnS of NF provisioning,
Example A12 includes the apparatus of example A11 and/or some other example(s) herein, wherein the MnS of NF provisioning is configured to send a notification notifyMOIAttributeValueChange to MnS of D-SON management that will send a notification notifyMOIAttributeValueChange to the MnS consumer of D-SON management to indicate the PCI value(s) being assigned to NR cell(s).
Example A13 may include an apparatus of a New Radio (NR) network, the apparatus comprising: memory and processing circuitry configured to operate as the consumer of MnS of Centralized SON (C-SON) when configured to perform initial PCI configuration, and the processing circuitry is to is configured to: consume the MnS of C-SON with modifyMOIAttributes operation to enable the PCI configuration function for NR cell(s); and receive a notification notifyMOIAttributeValueChange from the MnS producer of C-SON to indicate the PCI value(s) being assigned to NR cell(s).
Example A14 includes the apparatus of example A13 and/or some other example(s) herein, wherein the MnS of C-SON is configured to: select a PCI value, and consume the MnS of NF provisioning with modifyMOIAttributes operation to configure the PCI value for a given NR cell; and send a notification notifyMOIAttributeValueChange to the MnS consumer of C-SON to indicate the PCI value(s) being assigned to NR cell(s).
Example A15 includes the apparatus of example A14 and/or some other example(s) herein, wherein the MnS of NF provisioning is configured to set the PCI value at the NR cell.
Example A16 includes an apparatus of a New Radio (NR) network, the apparatus comprising: memory and processing circuitry configured to operate as the consumer of MnS of C-SON when configured to perform PCI re-configuration, the processing circuitry is to is configured to: receive a notification notifyNewAlarm from MnS producer of C-SON to report the PCI collision or PCI confusion problems; and receive a notification notifyClearedNewAlarm from MnS producer of C-SON to report the PCI collision or PCI confusion problems being resolved.
Example A17 includes the apparatus of example A16 and/or some other example(s) herein, wherein the MnS producer of C-SON is configured: receive PCI related performance measurements from MnS of performance assurance; and analyze the NRM data and PCI related measurements to detect the PCI collision or PCI confusion problems for NR cell(s).
Example A18 includes the apparatus of example A17 and/or some other example(s) herein, wherein upon detecting the PCI collision or PCI confusion problems for NR cell(s), the MnS producer of C-SON is configured to: send a notification notifyNewAlarm to MnS consumer of C-SON to report the PCI collision or PCI confusion problems; determine the new PCI value(s) for NR cell(s); consume the MnS of NF provisioning with modifyMOIAttributes operation to re-configure the PCI list for NR cell(s); and send a notification notifyClearedAlarm to MnS consumer of C-SON to report the PCI collision or PCI confusion problems being solved.
Example A19 includes the apparatus of example A18 and/or some other example(s) herein, wherein the MnS of NF provisioning is configured to set the PCI value(s) for NR cell(s).
Example A20 includes the apparatus of example A17 and/or some other example(s) herein, wherein one of the PCI related performance measurements is the PCI of candidate cells measurement that contain cumulative counter with subcounters that is identified by the PCI value(s) of the candidate cells, and is derived from MeasResultListNR as defined in TS 38.331 [i2] where it contains PCI in PhysCellId, and RSRP/RSRQ in MeasQuantityResults of candidate cells.
Example A21 includes the apparatus of example A20 and/or some other example(s) herein, wherein one the measurement is generated when the RSRP received from the candidate cells exceeds certain threshold.
Example A22 includes the apparatus of example A20 and/or some other example(s) herein, wherein an example of the measurement is shown with 3 subcounters: subcounter #1 (PCI 7) is 1 that means one measurement is received with PCI =7; subcounter #2 (PCI 1) is 2 that means two measurement is received with PCI =1; and subcounter #3 (PCI 9) is 3 that means three measurement is received with PCI =7.
Example B01 includes a method of operating a management service (MnS) producer of Distributed Self-Organizing Network (D-SON) management, the method comprising: receiving, by the MnS producer from an MnS consumer of D-SON management, a first request for configuration of a PCI list for one or more NR cells ("NR cell(s)"), the first request being based on invocation of a modifyMOIAttributes operation by the MnS consumer; receiving, by the MnS producer from the MnS consumer, a second request to enable a PCI configuration function for NR cell(s), the second request being based on another invocation of the modifyMOIAttributes operation; and sending, by the MnS producer to the MnS consumer, a notifyMOIAttributeValueChange indicating one or more PCI values ("PCI value(s)") being assigned to the NR cell(s).
Example B02 includes the method of example B01 and/or some other example(s) herein, further comprising: invoking, in response to receipt of the first request, the modifyMOIAttributes operation to configure the PCI list for NR cell(s), wherein invocation of the modifyMOIAttributes causes a PCI list for individual NR cell(s) to be sent to an MnS of network function (NF) provisioning to set the PCI list for the PCI configuration function in the NR cell(s).
Example B03 includes the method of example B02 and/or some other example(s) herein, further comprising: invoking, in response to receipt of the second request, the modifyMOIAttributes operation to enable the PCI configuration function, wherein invocation of the modifyMOIAttributes to cause the MnS of NF provisioning to enable the PCI configuration function to configure the PCI value(s) in the NR cell(s).
Example B04 includes the method of examples B02-B03 and/or some other example(s) herein, wherein after the PCI configuration function is enabled, and the PCI list is given, the PCI configuration function is to select the PCI value(s) from the PCI list; and report the PCI value(s) assigned to the MnS of NF provisioning.
Example B05 includes the method of examples B03-B04 and/or some other example(s) herein, further comprising: receiving, by the MsN producer from the MnS of NF provisioning, a notifyMOIAttributeValueChange indicating the PCI value(s) assigned to NR cell(s).
Example B06 includes the method of examples B01-B05 and/or some other example(s) herein, further comprising: sending, to the MsN consumer, a notifyNewAlarm to report a detected PCI collision and/or detected PCI confusion; receiving, from the MnS consumer, a third request to reconfigure the PCI list for the NR cell(s) based on an invocation of the modifyMOIAttributes operation; sending, to the MsN consumer, a notifyMOIAttributeValueChange to indicate the PCI value(s) being assigned to the NR cell(s); and sending, to the MsN consumer, a notifyClearedNewAlarm to report a resolution of the PCI collision or the PCI confusion.
Example B07 includes the method of example B06 and/or some other example(s) herein, further comprising: receiving, from a fault supervision MnS producer, a notifyNewAlarm indicating the detected PCI collision and/or the detected PCI confusion; and sending the notifyNewAlarm to the MsN consumer in response to receipt of the notifyNewAlarm from the fault supervision MnS producer.
Example B08 includes the method of example B07 and/or some other example(s) herein, further comprising: receiving, from the fault supervision MnS producer, a notifyClearedNewAlarm indicating that the PCI collision or the PCI confusion have been or are being resolved; and sending the notifyClearedNewAlarm to the MsN consumer in response to receipt of the notifyClearedNewAlarm from the fault supervision MnS producer.
Example B09 includes the method of examples B06-B08 and/or some other example(s) herein, further comprising: invoking, in response to receipt of the third request, the modifyMOIAttributes operation to reconfigure the PCI list for the NR cell(s), wherein invocation of the modifyMOIAttributes causes the PCI list for individual NR cell(s) to be sent to the MnS of NF provisioning to re-set the PCI list for the PCI configuration function in the NR cell(s).
Example B10 includes the method of example B09 and/or some other example(s) herein, wherein the MnS of NF provisioning is to set the new PCI list at the PCI configuration function.
Example B11 includes the method of example B10 and/or some other example(s) herein, wherein the PCI configuration function is to select the PCI value from the list, and report the PCI value(s) assigned to the MnS of NF provisioning,
Example B12 includes the method of example B11 and/or some other example(s) herein, further comprising: receiving, from the MnS of NF provisioning, a notifyMOIAttributeValueChange indicating the PCI value(s) being assigned to the NR cell(s); and sending the notifyMOIAttributeValueChange to the MnS consumer in response to receipt of the notifyMOIAttributeValueChange from the MnS of NF provisioning.
Example B13 includes a method of operating a management service (MnS) producer of Centralized Self-Organizing Network (C-SON) management, the method comprising: receiving, by the MnS producer from an MnS consumer of C-SON management, a request to enable a PCI configuration function for one or more NR cells ("NR cell(s)"), the request being based on invocation of a modifyMOIAttributes operation; and sending, by the MnS producer to the MnS consumer, a notifyMOIAttributeValueChange indicating one or more PCI values ("PCI value(s)") being assigned to the NR cell(s).
Example B14 includes the method of example B13 and/or some other example(s) herein, further comprising: selecting, by the MnS producer, a PCI value; sending, by the MnS producer to an MnS of NF provisioning, a request to configure the selected PCI value for the NR cell(s), the request being based on invocation of a modifyMOIAttributes operation; and sending, by the MnS producer to the MnS consumer, a notifyMOIAttributeValueChange to indicate the PCI value(s) being assigned to the NR cell(s).
Example B15 includes the method of example B14 and/or some other example(s) herein, wherein the MnS of NF provisioning is to set the PCI value at the NR cell(s).
Example B16 includes the method of examples B13-B15 and/or some other example(s) herein, further comprising: sending, by the MnS producer to the MsN consumer, a notifyNewAlarm to report a detected PCI collision and/or a detected PCI confusion; and sending, by the MnS producer to the MsN consumer, a notifyClearedNewAlarm to report the detected PCI collision and/or the detected PCI confusion being resolved.
Example B17 includes the method of example B16 and/or some other example(s) herein, further comprising: receiving, by the MnS producer from an MnS of performance assurance, PCI related performance measurements; and analyzing, by the MnS producer, Network Resource Model (NRM) data and PCI related measurements to detect the PCI collision and/or the PCI confusion for the NR cell(s).
Example B18 includes the method of example B17 and/or some other example(s) herein, further comprising: upon detecting the PCI collision and/or the PCI confusion for the NR cell(s): sending, by the MnS producer to the MnS consumer, a notifyNewAlarm to report the PCI collision and/or the PCI confusion; determining, by the MnS producer, the new PCI value(s) for NR cell(s); sending, by the MnS producer to an MnS of NF provisioning, a request to reconfigure the PCI list for the NR cell(s) based on invocation of the modifyMOIAttributes operation; and sending, by the MnS producer to the MnS consumer, a notifyClearedAlarm to report the PCI collision and/or the PCI confusion being or to be resolved.
Example B19 includes the method of example B18 and/or some other example(s) herein, wherein the MnS of NF provisioning is to set the PCI value(s) for NR cell(s).
Example B20 includes the method of examples B17-B19 and/or some other example(s) herein, wherein one of the PCI related performance measurements is a PCI of one or more candidate cell measurements that contain a cumulative counter with subcounters that is/are identified by the PCI value(s) of the candidate cells, and the method comprises: deriving the candidate cell measurements and/or the PCI of the one or more candidate cell measurements from a *MeasResultListNR* Information Element (IE)/parameter that contains the PCI in a *PhysCellId* IE/parameter, and RSRP/RSRQ measurement parameters in a *MeasQuantityResults* IE/parameter for the candidate cells, the *MeasResultListNR* and the *MeasQuantityResults* being included in a measurement result (*MeasResults*) IE of a measurement report message.
Example B21 includes the method of example B20 and/or some other example(s) herein, wherein one the measurements is generated when the RSRP, RSRQ, SINR, and/or some other type of measurement or the candidate cells exceeds a threshold.
Example B22 includes the apparatus of examples B20-B21 and/or some other example(s) herein, wherein a measurement with three subcounters includes a first subcounter to indicate a first number of measurements received with a first PCI, a second subcounter to indicate a second number of measurements received with a second PCI, and a third subcounter to indicate a third number of measurements received with a third PCI.
Example C1 is an apparatus for a new radio (NR) network, the apparatus comprising: means for configuring the apparatus to operate as a distributed self-organizing network (D-SON) management function, comprising: means for obtaining a Management Service (MnS) of network function (NF) provisioning with modifyMOIAttributes operation to configure a Physical Layer Cell Identity (PCI) list for a NR cell; means for setting, after obtaining the MnS of NF provisioning with modifyMOIAttributes operation to configure the PCI list for the NR cell, the PCI list at a PCI configuration function; and means for receiving, from an MnS producer of provisioning after setting the PCI list at the PCI configuration function, a PCI value being assigned for the NR cell, the PCI value being the initial PCI value selected from the PCI list.
In Example C2, the subject matter of Example C1 includes, means for receiving, from the MnS of provisioning after obtaining the MnS of NF provisioning with modifyMOIAttributes operation to configure the PCI list, a notifyMOIAttributeValueChange notification to indicate the PCI value being assigned to the NR cell.
In Example C3, the subject matter of Examples C1-C2 includes, means for obtaining, after obtaining the MnS of NF provisioning with modifyMOIAttributes operation to configure the PCI list, an MnS of NF provisioning with modifyMOIAttributes operation to enable the PCI configuration function; means for providing, to the MnS producer of provisioning, the modifyMOIAttributes operation for the MnS producer of provisioning to enable the PCI configuration function; and means for obtaining the PCI value from the MnS producer of provisioning after the PCI configuration function is enabled.
In Example C4, the subject matter of Example C3 includes, wherein the PCI configuration function selects the initial PCI value selected from the PCI list.
In Example C5, the subject matter of Examples C1-C4 includes, means for obtaining a MnS of NF provisioning with modifyMOIAttributes operation to re-configure the PCI list for the NR cell; means for providing, to the MnS producer of provisioning in response to obtaining the MnS of NF provisioning with modifyMOIAttributes operation to re-configure the PCI list for the NR cell, the PCI list; and means for receiving, from the MnS of provisioning after providing the MnS of NF provisioning with modifyMOIAttributes operation to re-configure the PCI list for the NR cell, a notifyMOIAttributeValueChange notification to indicate a new PCI value for the NR cell, the new PCI value selected from the PCI list.
In Example C6, the subject matter of Example C5 includes, to re-configure a PCI list for the NR cell: means for receiving, from a MnS producer of fault supervision, a notifyNewAlarm notification to report a PCI collision or PCI confusion problem detected on the NR cell; means for obtaining, in response to reception of the notifyNewAlarm notification, the MnS of NF provisioning with modifyMOIAttributes operation to re-configure the PCI list; and means for receiving, from the MnS producer of fault supervision after reception of the notifyMOIAttributeValueChange notification, a notifyClearedAlarm notification to report the PCI collision or PCI confusion problems being resolved.
Example C7 is a system for a new radio (NR) network, the system comprising: a Management Service (MnS) producer of centralized self-organizing network (C-SON) comprising means for determining an initial Physical Layer Cell Identity (PCI) value for a NR cell; and an MnS producer of provisioning comprising: means for obtaining, from the MnS producer of C-SON, a MnS of network function (NF) provisioning with modifyMOIAttributes operation to configure the PCI value for the NR cell; and means for setting, after obtaining the MnS of NF provisioning with modifyMOIAttributes operation to configure the initial PCI value for the NR cell, the initial PCI value for the NR cell.
In Example C8, the subject matter of Example C7 includes, wherein the MnS producer of C-SON further comprises means for receiving, from the MnS of provisioning in response to setting the initial PCI value for the NR cell, a notifyMOIAttributeValueChange notification to indicate a PCI value being assigned to the NR cell.
In Example C9, the subject matter of Examples C7-C8 includes, wherein the MnS producer of provisioning further comprises: means for obtaining, from the MnS producer of C-SON, a MnS of NF provisioning with modifyMOIAttributes operation to re-configure the PCI value to a new PCI value; and means for re-configuring, in response to obtaining the MnS of NF provisioning with modifyMOIAttributes operation to re-configure the PCI value, the PCI value for the NR cell to the new PCI value.
In Example C10, the subject matter of Example C9 includes, wherein the MnS producer of C-SON further comprises means for receiving, from the MnS of provisioning in response to re-configuring the PCI value, a notifyMOIAttributeValueChange notification to indicate the new PCI value as being assigned to the NR cell.
In Example C11, the subject matter of Examples C9-C10 includes, a MnS producer of performance assurance, wherein the MnS producer of C-SON further comprises: means for collecting, from the MnS producer of performance assurance, PCI-related performance measurements; means for analysing Network Resource Model (NRM) data and the PCI-related performance measurements to detect a PCI collision or PCI confusion problem for the NR cell; and means for sending, to the MnS of provisioning after detection of the PCI collision or PCI confusion problem for the NR cell, the MnS of NF provisioning with modifyMOIAttributes operation to re-configure the PCI value to the new PCI value.
In Example C12, the subject matter of Example C11 includes, wherein the PCI-related performance measurements are derived from MeasResultListNR, which is a list of measured results for a maximum number of reported best cells for an NR measurement identity.
In Example C13, the subject matter of Examples C11-C12 includes, wherein the MnS producer of C-SON further comprising: means for determining, in response to detection of the PCI collision or PCI confusion problem for the NR cell, the new PCI value; and means for sending, to the MnS of provisioning after determining the new PCI value, the MnS of NF provisioning with modifyMOIAttributes operation to re-configure the PCI value to the new PCI value.
Example C14 is a computer-readable storage medium that stores instructions for execution by one or more processors configured to operate as a Management Service (MnS) producer of Distributed SON (D-SON) management in a new radio (NR) network, the instructions when executed to assign an initial PCI value for the NR cell configure the one or more processors to: obtain a MnS of network function (NF) provisioning with modifyMOIAttributes operation to configure a Physical Layer Cell Identity (PCI) list for a NR cell; set, in response to the MnS of NF provisioning with modifyMOIAttributes operation to configure the PCI list for the NR cell, the PCI list at a PCI configuration function; obtain, setting the PCI list at the PCI configuration function, a MnS of NF provisioning with modifyMOIAttributes operation to enable the PCI configuration function; and receive, from the MnS of NF provisioning after obtaining the MnS of NF provisioning with modifyMOIAttributes operation to enable the PCI configuration function, a notifyMOIAttributeValueChange notification to indicate a PCI value being assigned to the NR cell.
In Example C15, the subject matter of Example C14 includes, wherein the instructions to re-configure the PCI list for the NR cell when executed further configure the one or more processors to: obtain a MnS of NF provisioning with modifyMOIAttributes operation to re-configure the PCI list; re-configure, in response to obtaining the MnS of NF provisioning with modifyMOIAttributes operation to re-configure the PCI list, the PCI list at a PCI configuration function; and receive, from the MnS of NF provisioning in response to obtaining of the MnS of NF provisioning with modifyMOIAttributes operation to re-configure the PCI list, a notifyMOIAttributeValueChange notification to indicate the PCI value.
Example Z01 may include an apparatus comprising means to perform one or more elements of a method described in or related to any of examples A01-A22, B01-B22, or any other method or process described herein.
Example Z02 may include one or more non-transitory computer-readable media comprising instructions to cause an electronic device, upon execution of the instructions by one or more processors of the electronic device, to perform one or more elements of a method described in or related to any of examples A01-A22, B01-B22, C01-C15 or any other method or process described herein.
Example Z03 may include an apparatus comprising logic, modules, or circuitry to perform one or more elements of a method described in or related to any of examples A01-A22, B01-B22, C01-C15 or any other method or process described herein.
Example Z04 may include a method, technique, or process as described in or related to any of examples A01-A22, B01-B22, C01-C15 or portions or parts thereof.
Example Z05 may include an apparatus comprising: one or more processors and one or more computer-readable media comprising instructions that, when executed by the one or more processors, cause the one or more processors to perform the method, techniques, or process as described in or related to any of examples A01-A22, B01-B22, C01-C15 or portions thereof.
Example Z06 may include a signal as described in or related to any of examples A01-A22, B01-B22, C01-C15 or portions or parts thereof.
Example Z07 may include a datagram, packet, frame, segment, protocol data unit (PDU), or message as described in or related to any of examples A01-A22, B01-B22, C01-C15 or portions or parts thereof, or otherwise described in the present disclosure.
Example Z08 may include a signal encoded with data as described in or related to any of examples A01-A22, B01-B22, C01-C15 or portions or parts thereof, or otherwise described in the present disclosure.
Example Z09 may include a signal encoded with a datagram, packet, frame, segment, protocol data unit (PDU), or message as described in or related to any of examples A01-A22, B01-B22, C01-C15 or portions or parts thereof, or otherwise described in the present disclosure.
Example Z10 may include an electromagnetic signal carrying computer-readable instructions, wherein execution of the computer-readable instructions by one or more processors is to cause the one or more processors to perform the method, techniques, or process as described in or related to any of examples A01-A22, B01-B22, C01-C15 or portions thereof.
Example Z11 may include a computer program comprising instructions, wherein execution of the program by a processing element is to cause the processing element to carry out the method, techniques, or process as described in or related to any of examples A01-A22, B01-B22, C01-C15 or portions thereof.
Example Z12 may include a signal in a wireless network as shown and described herein.
Example Z13 may include a method of communicating in a wireless network as shown and described herein.
Example Z14 may include a system for providing wireless communication as shown and described herein.
Example Z15 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although an embodiment has been described with reference to specific example embodiments, it will be evident that various modifications and changes may be made to these embodiments without departing from the broader scope of the present disclosure. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims.

The subject matter may be referred to herein, individually and/or collectively, by the term "embodiment" merely for convenience and without intending to voluntarily limit the scope of this application to any single inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, UE, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. An apparatus for a new radio, NR, network, the apparatus comprising:
means for configuring the apparatus to operate as a distributed self-organizing network, D-SON, management function, comprising:
means for obtaining a Management Service, MnS, of network function, NF, provisioning with *modifyMOIAttributes* operation to configure a Physical Layer Cell Identity, PCI, list for a NR cell;
means for setting, after obtaining the MnS of NF provisioning with *modifyMOIAttributes* operation to configure the PCI list for the NR cell, the PCI list at a PCI configuration function; and
means for receiving, from an MnS producer of provisioning after setting the PCI list at the PCI configuration function, a PCI value being assigned for the NR cell, the PCI value being the initial PCI value selected from the PCI list.

2. The apparatus of claim 1, further comprising means for receiving, from the MnS of provisioning after obtaining the MnS of NF provisioning with *modifyMOIAttributes* operation to configure the PCI list, a *notifyMOIAttributeValueChange* notification to indicate the PCI value being assigned to the NR cell.

3. The apparatus of claim 1 or 2, further comprising:
means for obtaining, after obtaining the MnS of NF provisioning with *modifyMOIAttributes* operation to configure the PCI list, an MnS of NF provisioning with *modifyMOIAttributes* operation to enable the PCI configuration function;
means for providing, to the MnS producer of provisioning, the *modifyMOIAttributes* operation for the MnS producer of provisioning to enable the PCI configuration function; and
means for obtaining the PCI value from the MnS producer of provisioning after the PCI configuration function is enabled.

4. The apparatus of claim 3, wherein the PCI configuration function selects the initial PCI value selected from the PCI list.

5. The apparatus of any one or more of claims 1-4, further comprising:
means for obtaining a MnS of NF provisioning with *modifyMOIAttributes* operation to re-configure the PCI list for the NR cell;
means for providing, to the MnS producer of provisioning in response to obtaining the MnS of NF provisioning with *modifyMOIAttributes* operation to re-configure the PCI list for the NR cell, the PCI list; and
means for receiving, from the MnS of provisioning after providing the MnS of NF provisioning with *modifyMOIAttributes* operation to re-configure the PCI list for the NR cell, a *notifyMOIAttributeValueChange* notification to indicate a new PCI value for the NR cell, the new PCI value selected from the PCI list.

6. The apparatus of claim 5, further comprising, to re-configure a PCI list for the NR cell:
means for receiving, from a MnS producer of fault supervision, a *notifyNewAlarm* notification to report a PCI collision or PCI confusion problem detected on the NR cell;
means for obtaining, in response to reception of the *notifyNewAlarm* notification, the MnS of NF provisioning with *modifyMOIAttributes* operation to re-configure the PCI list; and
means for receiving, from the MnS producer of fault supervision after reception of the *notifyMOIAttributeValueChange* notification, a *notifyClearedAlarm* notification to report the PCI collision or PCI confusion problems being resolved.

7. A system for a new radio, NR, network, the system comprising:
a Management Service, MnS, producer of centralized self-organizing network, C-SON, comprising means for determining an initial Physical Layer Cell Identity, PCI, value for a NR cell; and
an MnS producer of provisioning comprising:
means for obtaining, from the MnS producer of C-SON, a MnS of network function (NF) provisioning with *modifyMOIAttributes* operation to configure the PCI value for the NR cell; and
means for setting, after obtaining the MnS of NF provisioning with *modifyMOIAttributes* operation to configure the initial PCI value for the NR cell, the initial PCI value for the NR cell.

8. The system of claim 7, wherein the MnS producer of C-SON further comprises means for receiving, from the MnS of provisioning in response to setting the initial PCI value for the NR cell, a *notifyMOIAttributeValueChange* notification to indicate a PCI value being assigned to the NR cell.

9. The system of claim 7 or 8, wherein the MnS producer of provisioning further comprises:
means for obtaining, from the MnS producer of C-SON, a MnS of NF provisioning with *modifyMOIAttributes* operation to re-configure the PCI value to a new PCI value; and
means for re-configuring, in response to obtaining the MnS of NF provisioning with *modifyMOIAttributes* operation to re-configure the PCI value, the PCI value for the NR cell to the new PCI value.

10. The system of claim 9, wherein the MnS producer of C-SON further comprises means for receiving, from the MnS of provisioning in response to re-configuring the PCI value, a *notifyMOIAttributeValueChange* notification to indicate the new PCI value as being assigned to the NR cell.

11. The system of claim 9 or 10, further comprising a MnS producer of performance assurance, wherein the MnS producer of C-SON further comprises:
means for collecting, from the MnS producer of performance assurance, PCI-related performance measurements;
means for analysing Network Resource Model, NRM, data and the PCI-related performance measurements to detect a PCI collision or PCI confusion problem for the NR cell; and
means for sending, to the MnS of provisioning after detection of the PCI collision or PCI confusion problem for the NR cell, the MnS of NF provisioning with *modifyMOIAttributes* operation to re-configure the PCI value to the new PCI value.

12. The system of claim 11, wherein the PCI-related performance measurements are derived from MeasResultListNR, which is a list of measured results for a maximum number of reported best cells for an NR measurement identity.

13. The system of claim 11 or 12, wherein the MnS producer of C-SON further comprising:
means for determining, in response to detection of the PCI collision or PCI confusion problem for the NR cell, the new PCI value; and
means for sending, to the MnS of provisioning after determining the new PCI value, the MnS of NF provisioning with *modifyMOIAttributes* operation to re-configure the PCI value to the new PCI value.

14. A computer-readable storage medium that stores instructions for execution by one or more processors configured to operate as a Management Service, MnS, producer of Distributed SON, D-SON, management in a new radio, NR, network, the instructions when executed to assign an initial PCI value for the NR cell configure the one or more processors to:
obtain a MnS of network function, NF, provisioning with *modifyMOIAttributes* operation to configure a Physical Layer Cell Identity, PCI, list for a NR cell;
set, in response to the MnS of NF provisioning with *modifyMOIAttributes* operation to configure the PCI list for the NR cell, the PCI list at a PCI configuration function;
obtain, setting the PCI list at the PCI configuration function, a MnS of NF provisioning with *modifyMOIAttributes* operation to enable the PCI configuration function; and
receive, from the MnS of NF provisioning after obtaining the MnS of NF provisioning with *modifyMOIAttributes* operation to enable the PCI configuration function, a *notifyMOIAttributeValueChange* notification to indicate a PCI value being assigned to the NR cell.

15. The medium of claim 14, wherein the instructions to re-configure the PCI list for the NR cell when executed further configure the one or more processors to:
obtain a MnS of NF provisioning with *modifyMOIAttributes* operation to re-configure the PCI list;
re-configure, in response to obtaining the MnS of NF provisioning with *modifyMOIAttributes* operation to re-configure the PCI list, the PCI list at a PCI configuration function; and
receive, from the MnS of NF provisioning in response to obtaining of the MnS of NF provisioning with *modifyMOIAttributes* operation to re-configure the PCI list, a *notifyMOIAttributeValueChange* notification to indicate the PCI value.
